# EUROPÄISCHE PATENTANMELDUNG

(11) **EP 4 024 647 A1**
(43) Veröffentlichungstag der Anmeldung: **06.07.2022**
(21) Anmeldenummer: 20217867.9
(22) Anmeldetag: 30.12.2020
(51) Int. Cl.: H02J 3/38, F03D 7/02, F03D 9/25

(54) **VERFAHREN ZUM EINSPEISEN ELEKTRISCHER LEISTUNG IN EIN ELEKTRISCHES VERSORGUNGSNETZ**

(71) Anmelder: Wobben Properties GmbH, 26607 Aurich (DE)
(72) Erfinder: Brombach, Johannes, 13437 Berlin (DE)
(74) Vertreter: Eisenführ Speiser

(57) **Zusammenfassung**

Die Erfindung betrifft ein Verfahren zum Einspeisen elektrischer Leistung in ein elektrisches Versorgungsnetz, und das elektrische Versorgungsnetz (120, 300, 468) umfasst mehrere Verbraucher (306, 312) zum Verbrauchen elektrischer Leistung aus dem elektrischen Versorgungsnetz (120, 300, 468), und mehrere Einspeiser (304, 308) zum Einspeisen elektrischer Leistung in das elektrische Versorgungsnetz (120, 300, 468), wobei ein Einspeiser als Umrichtereinspeiser oder als konventioneller Einspeiser vorgesehen sein kann, und jeweils durch eine Nennleistung gekennzeichnet ist, wobei ein Umrichtereinspeiser einen Einspeiser bezeichnet, der mittels wenigstens eines Frequenzumrichters oder Frequenzwechselrichters einspeist, und ein konventioneller Einspeiser alle übrigen Einspeiser bezeichnet, das Einspeisen in Abhängigkeit von einer statischen Umrichterpenetration und einer dynamischen Umrichterpenetration des elektrischen Versorgungsnetzes oder eines Netzabschnitts (302)davon gesteuert wird, wobei die statische Umrichterpenetration ein Verhältnis bezeichnet von einer Summe der Nennleistungen aller Umrichtereinspeiser, die mit dem elektrischen Versorgungsnetz bzw. dem Netzabschnitt (302) verbunden sind, zu einer Summe der Nennleistungen aller Einspeiser, die mit dem elektrischen Versorgungsnetz bzw. dem Netzabschnitt (302) verbunden sind, und die dynamische Umrichterpenetration ein Verhältnis bezeichnet von einer Leistungsmenge, die durch alle mit dem elektrischen Versorgungsnetz bzw. dem Netzabschnitt (302) verbundenen Umrichtereinspeiser eingespeist wird, zu einer Leistungsmenge, die durch alle mit dem elektrischen Versorgungsnetz bzw. dem Netzabschnitt (302) verbundenen Einspeiser eingespeist wird.

## Beschreibung

Die vorliegende Erfindung betrifft ein Verfahren zum Einspeisen elektrischer Leistung in ein elektrisches Versorgungsnetz. Die Erfindung betrifft auch ein Windenergiesystem mit einer oder mehreren Windenergieanlagen, das zum Einspeisen elektrischer Leistung in ein elektrisches Versorgungsnetz vorbereitet ist.

Verfahren zum Einspeisen elektrischer Leistung in ein elektrisches Versorgungsnetz sind bekannt. Sie haben häufig nicht nur die Aufgabe, das elektrische Versorgungsnetz und damit die angeschlossenen Verbraucher mit elektrischer Leistung zu versorgen, sondern auch eine Stabilität des elektrischen Versorgungsnetzes zu gewährleisten oder zumindest zu unterstützen. Herkömmliche Großkraftwerke verwenden dafür direkt gekoppelte Synchrongeneratoren, und die große Trägheit solcher großen Synchrongeneratoren wirkt stabilisierend für das elektrische Versorgungsnetz. Das wird besonders durch das zugrundeliegende physikalische Verhalten solcher Synchrongeneratoren erreicht.

Heutzutage nimmt aber der Anteil dezentraler Einspeiser, insbesondere Windenergieanlagen bzw. Windparks und Photovoltaikanlagen zu. Solche Einspeiser speisen mittels eines Frequenzumrichters oder Frequenzwechselrichters ein und können daher auch als Umrichtereinspeiser bezeichnet werden. Der Unterschied zwischen Frequenzumrichter und Frequenzwechselrichter ist für die vorliegende Sache nicht von Bedeutung und nachfolgend wird daher vereinfachend nur von Umrichter bzw. Umrichtereinspeiser gesprochen.

Solche Umrichter können den einzuspeisenden Strom vergleichsweise frei vorgeben, insbesondere hinsichtlich Betrag, Frequenz und Phase. Ein durch solche Umrichter eingespeister Strom reagiert nicht unmittelbar auf Veränderungen im elektrischen Versorgungsnetz, jedenfalls signifikant weniger als dies bei einem direkt gekoppelten Synchrongenerator der Fall ist. Ein solcher Umrichtereinspeiser weist somit keine intrinsische Stabilisierungseigenschaft auf. Dafür können bei einem solchen Umrichtereinspeiser aber gezielt konkrete Verhaltensweisen implementiert werden.

Die verwendeten Einspeiser haben somit Auswirkungen auf das grundsätzliche Verhalten des elektrischen Versorgungsnetzes. Das wiederum kann auch Einfluss darauf haben, wie ein solches elektrisches Versorgungsnetz stabil zu halten ist.

Grundsätzlich könnten Umrichtereinspeiser so programmiert werden, dass sie sich ähnlich wie direkt gekoppelte Synchrongeneratoren verhalten. Nachteilig hieran wäre aber, dass es schwierig ist, ein solches Verhalten exakt zu emulieren. Das liegt unter anderem daran, dass eine Veränderung im elektrischen Versorgungsnetz, z. B. eine Spannungsänderung, auf die ein direkt gekoppelter Synchrongenerator aufgrund seiner physikalischen Eigenschaft sofort und unmittelbar reagieren würde, bei einem Umrichtereinspeiser zunächst messtechnisch erfasst werden müsste. Allerdings eröffnet die freie Steuerbarkeit eines Umrichtereinspeisers neue Steuerungsmöglichkeiten, die nicht oder schlechter genutzt werden könnten, wenn der Umrichtereinspeiser so programmiert wird, dass er sich ähnlich wie ein direkt gekoppelter Synchrongenerator verhält.

Es kommt hinzu, dass Umrichtereinspeiser im Gegensatz zu herkömmlichen Großkraftwerken meist dezentral einspeisen. Weiterhin ist zu berücksichtigen, dass Umrichtereinspeiser meist als Windenergieanlage, Windpark oder Photovoltaikanlage ausgebildet sind und dadurch eine schwankende Eingangsenergie berücksichtigen müssen.

Daher scheint es sinnvoll zu sein, die Besonderheiten solcher Umrichtereinspeiser zu berücksichtigen und möglichst in vorteilhafter Art und Weise einzusetzen.

Der vorliegenden Erfindung liegt somit die Aufgabe zugrunde, zumindest eines der vorstehend genannten Probleme oder eine vorstehend genannte Besonderheit zu adressieren. Insbesondere soll eine Lösung vorgeschlagen werden zum Stabilisieren des elektrischen Versorgungsnetzes bei steigendem Anteil Umrichtereinspeiser im elektrischen Versorgungsnetz. Zumindest soll zu bisher bekannten Lösungen eine alternative Lösung vorgeschlagen werden.

Erfindungsgemäß wird ein Verfahren nach Anspruch 1 vorgeschlagen. Dieses ist zum Einspeisen elektrischer Leistung in ein elektrisches Versorgungsnetz vorgesehen. Das hier zugrunde gelegte elektrische Versorgungsnetz umfasst mehrere Verbraucher zum Verbrauchen elektrischer Leistung aus dem elektrischen Versorgungsnetz und mehrere Einspeiser zum Einspeisen elektrischer Leistung in das elektrische Versorgungsnetz. Ein Einspeiser kann jeweils als Umrichtereinspeiser oder als konventioneller Einspeiser vorgesehen sein und jeweils durch eine Nennleistung gekennzeichnet sein.

Als Umrichtereinspeiser wird ein Einspeiser bezeichnet, der mittels wenigstens eines Frequenzumrichters oder Frequenzwechselrichters einspeist. Als konventioneller Einspeiser werden alle übrigen Einspeiser bezeichnet. Ein Umrichtereinspeiser kann dabei insbesondere eine Windenergieanlage, ein Windpark oder eine Photovoltaikanlage sein. Der Umrichter, insbesondere Frequenzwechselrichter, erhält dabei eingangsseitig elektrische Energie, die im Grunde noch unkonditioniert ist. Sie kann beispielsweise als Gleichstrom mit schwankender Amplitude vorgesehen sein. Basierend auf dieser Eingangsenergie erzeugt der Frequenzumrichter oder Frequenzwechselrichter einen Wechselstrom zum Einspeisen in das elektrische Versorgungsnetz.

Weiterhin ist vorgesehen, dass das Einspeisen in Abhängigkeit von einer statischen Umrichterpenetration und in Abhängigkeit von einer dynamischen Umrichterpenetration des elektrischen Versorgungsnetzes oder eines Netzabschnitts davon gesteuert wird.

Besonders ist vorgesehen, dass das Einspeisen gemäß einer Steuerungsstrategie gesteuert wird. Diese Steuerungsstrategie kann alle Einspeiser oder nur einen Teil davon betreffen. Die Steuerungsstrategie kann dabei berücksichtigen, durch welche bzw. durch wie viele Einspeiser sie umgesetzt wird.

Es ist somit vorgesehen, dass die Steuerungsstrategie in Abhängigkeit von der statischen Umrichterpenetration und in Abhängigkeit von der dynamischen Umrichterpenetration des elektrischen Versorgungsnetzes oder eines Netzabschnitts davon ausgewählt wird. Beide Arten der Umrichterpenetration werden also von der Steuerungsstrategie berücksichtigt. Beide Arten der Umrichterpenetration betreffen dabei das elektrische Versorgungsnetz oder einen Netzabschnitt davon.

Dabei bezeichnet die statische Umrichterpenetration ein Verhältnis von einer Summe der Nennleistungen aller Umrichtereinspeiser, die mit dem elektrischen Versorgungsnetz bzw. dem Netzabschnitt verbunden sind, zu einer Summe der Nennleistungen aller Einspeiser, die mit dem elektrischen Versorgungsnetz bzw. dem Netzabschnitt verbunden sind. Hier werden also die Nennleistungen der jeweiligen Einspeiser betrachtet, unabhängig davon, ob diese Nennleistung eingespeist wird, ob nur eine geringere Leistung eingespeist wird, oder ob gegebenenfalls gar keine Leistung eingespeist wird. Es kommt hier nur darauf an, welches grundsätzliche Potential an Leistungseinspeisung für den jeweiligen Einspeiser vorhanden ist. Die Nennleistung charakterisiert dabei üblicherweise einen Einspeiser, sei es ein Umrichtereinspeiser oder ein konventioneller Einspeiser. Häufig entspricht die Nennleistung der Maximalleistung des jeweiligen Einspeisers, jedenfalls der Maximalleistung, die dauerhaft eingespeist werden darf.

Zur Berücksichtigung muss der entsprechende Einspeiser aber mit dem elektrischen Versorgungsnetz bzw. dem Netzabschnitt verbunden sein. Dabei geht es um eine elektrisch wirksame Verbindung, insbesondere um eine galvanische Verbindung zwischen dem jeweiligen Einspeiser und dem elektrischen Versorgungsnetz. Im Falle des Umrichtereinspeisers kann das bedeuten, dass eine galvanische Verbindung zwischen Umrichter oder Wechselrichter des Umrichtereinspeisers und dem elektrischen Versorgungsnetz besteht, ohne dass der Umrichter oder Wechselrichter ein Pulsmuster zum Einspeisen eines elektrischen Stroms in dem Moment erzeugen muss. Es wäre aber möglich, sofort ein solches Pulsmuster zum Erzeugen eines einzuspeisenden Stroms vorzugeben.

Die dynamische Umrichterpenetration bezeichnet ein Verhältnis von einer Leistungsmenge, die durch alle mit dem elektrischen Versorgungsnetz bzw. dem Netzabschnitt verbundenen Umrichtereinspeiser eingespeist wird, zu einer Leistungsmenge, die durch alle mit dem elektrischen Versorgungsnetz bzw. dem Netzabschnitt verbundenen Einspeiser eingespeist wird. Bei der dynamischen Umrichterpenetration geht es also nicht um einspeisbare Leistung, sondern um aktuell konkret eingespeiste Leistung.

Weist ein elektrisches Versorgungsnetz beispielsweise ein Großkraftwerk mit 2 GW Nennleistung auf, sowie zehn Windparks mit je 50 Windenergieanlagen, die jeweils eine Nennleistung von 4 MW aufweisen, so beträgt die statische Umrichterpenetration (10 x 50 x 4 MW) / (10 x 50 x 4 MW + 2 GW) = 0,5 = 50 %. Speisen dabei alle Windenergieanlagen jeweils mit ihrer halben Nennleistung ein, das Großkraftwerk aber mit Nennleistung, so beträgt die dynamische Umrichterpenetration (10 x 50 x 0,5 x 4 MW) / (10 x 50 x 0,5 x 4 MW + 2 GW) = 1/3 = 33 %.

Wenn nun der Wind abfällt, kann die dynamische Umrichterpenetration noch kleiner werden. Insoweit ist eine Eigenschaft der dynamischen Umrichterpenetration auch, dass sie viel variabler als die statische Umrichterpenetration ist. Die statische Umrichterpenetration kann sich auch ändern, dafür müsste aber ein Einspeiser von dem elektrischen Versorgungsnetz getrennt werden, oder mit dem elektrischen Versorgungsnetz verbunden werden.

Es wurde erkannt, dass die Umrichterpenetration das elektrische Versorgungsnetz grundlegend kennzeichnen kann und die Art und Weise beeinflussen kann, wie eingespeist wird und damit gesteuert werden kann. Dabei wurde erkannt, dass eine Veränderung des elektrischen Versorgungsnetzes durch Zunahme regenerativer Einspeiser damit auch zu einer Zunahme des Anteils von Umrichtereinspeisern im elektrischen Versorgungsnetz kommt und dass es daher sinnvoll sein kann, diesen Anteil von Umrichtereinspeisern zu berücksichtigen.

Es wurde zusätzlich erkannt, dass sowohl ein statischer Anteil als auch ein dynamischer Anteil relevant sein kann, dass damit unterschiedliche Eigenschaften verbunden sein können, und dass das differenziert betrachtet werden sollte. Details zu den Unterschieden und ihren potentiellen Auswirkungen werden unten noch beschrieben.

Zur Erfassung einer statischen Umrichterpenetration als auch einer dynamischen Umrichterpenetration können entsprechende Daten von den jeweiligen Einspeisern an eine Zentraleinheit übertragen werden. Die Informationen der vergleichsweise wenigen Großkraftwerke laufen üblicherweise in einer Leitzentrale zusammen. Dort ist dann zumindest die Information vorhanden, wie viel elektrische Leistung von dem jeweiligen Großkraftwerk, oder auch anderen konventionellen Kraftwerken, eingespeist wird und auch ob das betreffende Kraftwerk überhaupt an das elektrische Versorgungsnetz angeschlossen ist. Diese Daten können zur Beurteilung sowohl der statischen als auch der dynamischen Umrichterpenetration genutzt werden.

Umrichtereinspeiser werden üblicherweise über ein SCADA gesteuert und dabei werden auch Betriebsdaten der Umrichtereinspeiser an eine entsprechende Steuer- und Überwachungseinheit übermittelt. Es sind somit die notwendigen Daten sowohl zu konventionellen Kraftwerken als auch zu Umrichtereinspeisern verfügbar. Sollte zu einem oder einigen Umrichtereinspeisern eine solche Information nicht vorliegen, so könnten diese wenigen Umrichtereinspeiser in einer Schätzung mit berücksichtigt werden. Die Höhe der einspeisbaren Leistung lässt sich dabei bei Windenergieanlagen in Abhängigkeit vom vorherrschenden Wind schätzen, und bei Photovoltaikanlagen in Abhängigkeit von der vorhandenen Sonneneinstrahlung. Ob einzelne Umrichtereinspeiser vom Netz getrennt sind, kann über Wahrscheinlichkeitsbetrachtungen berücksichtigt werden, oder über bekannte Wartungszyklen oder-pläne.

Gemäß einem Aspekt wird vorgeschlagen, dass das Einspeisen bzw. die Steuerungsstrategie zusätzlich in Abhängigkeit von einer Umrichterreserveleistung gesteuert wird bzw. ausgewählt wird, wobei die Umrichterreserveleistung ein Verhältnis bezeichnet von einer Leistungsmenge, die durch alle Umrichtereinspeiser in das elektrische Versorgungsnetz bzw. den Netzabschnitt eingespeist wird, zu einer Leistungsmenge, auf die die Umrichtereinspeiser ihre eingespeiste Leistungsmenge erhöhen können.

Dieser Aspekt geht besonders von der Möglichkeit aus, dass Umrichtereinspeiser zum Zwecke einer potentiellen Netzstützung weniger Leistung einspeisen als sie könnten. Die Leistung, um die die eingespeiste Leistung somit reduziert ist, kann als Reserveleistung angesehen werden. Die Umrichterreserveleistung bezeichnet dabei die Summe aller dieser Reserveleistungen, die alle Umrichtereinspeiser des elektrischen Versorgungsnetzes bzw. des Netzabschnitts in dem betrachteten Moment aufweisen. Mit anderen Worten geht es hier um den Fall, dass einer oder mehrere Umrichtereinspeiser eingesenkt sind und diese Einsenkung wird berücksichtigt. Es geht somit um eine dauerhafte Reserveleistung, also eine Leistung, um die der aktuelle Arbeitspunkt auch dauerhaft erhöht werden könnte, insbesondere wenigstens um 10 Minuten.

Dies ist zu unterscheiden von einer Leistung, um die der Umrichtereinspeiser kurzzeitig, z. B. für 10 Sekunden, erhöht werden könnte. Eine solche kurzfristige Erhöhung wäre dadurch möglich, dass kinetische Energie eines Rotors einer Windenergieanlage in zusätzlich eingespeiste Leistung umgesetzt wird. Eine solche Eigenschaft kann zwar auch von Bedeutung sein, sie soll aber bei der Betrachtung der Umrichterreserveleistung nicht berücksichtigt werden.

Gemäß einem Aspekt wird vorgeschlagen, dass eine statische Umrichterpenetration geschätzt wird in Abhängigkeit von wenigstens einem Schätzkriterium einer ersten Gruppe aus der folgenden Liste:
Ein Schätzkriterium der ersten Gruppe ist eine erfasste Windgeschwindigkeit. Diese kann mit einer Mindestwindgeschwindigkeit verglichen werden und liegt sie darüber, ist für die Umrichtereinspeiser, die als Windenergieanlagen oder als Windparks ausgebildet sind, anzunehmen, dass diese mit dem elektrischen Versorgungsnetz verbunden sind.

Entsprechend ist eine erfasste Sonneneinstrahlung ein weiteres Schätzkriterium der ersten Gruppe. Auch hier kann ein Vergleich mit einer Mindestsonneneinstrahlung vorgenommen werden, ab der überhaupt erst ein Wechselrichter einer Photovoltaikanlage zu arbeiten beginnt. Ist also die erfasste Sonneneinstrahlung ausreichend hoch, ist anzunehmen, dass die Umrichtereinspeiser, die als Photovoltaikanlage ausgebildet sind, mit dem elektrischen Versorgungsnetz verbunden sind.

Besonders kommt in Betracht, dass Umrichtereinspeiser genau dann mit dem Netz verbunden sind, wenn sie als regenerative Einspeiser ausgebildet sind und ihr Eigenbedarf durch die Primärquelle, also durch den Wind oder die Sonneneinstrahlung gedeckt wird. Es kommt dann auch in Betracht, dass diese Umrichtereinspeiser mit dem elektrischen Versorgungsnetz verbunden sind, aber nicht oder nicht signifikant einspeisen. Ist allerdings die Windgeschwindigkeit bzw. Sonneneinstrahlung noch deutlich niedriger, würde das Bereithalten der entsprechenden Umrichtereinspeiser mehr Energie erfordern als durch Wind bzw. Sonne vorhanden ist. Es müsste also dazu Leistung aus dem elektrischen Versorgungsnetz entnommen werden, was aber vermieden werden soll, sodass von einer Abschaltung und damit Trennung der betreffenden Umrichtereinspeiser vom elektrischen Versorgungsnetz zu rechnen ist.

Ein weiteres Schätzkriterium der ersten Gruppe kann eine Aktivierungsvorschrift sein, die eine Vorschrift zum Aktivieren von Umrichtereinspeisern ist. Eine solche Aktivierungsvorschrift kann besonders von einem Netzbetreiber vorgegeben sein und beispielsweise die Aktivierung oder Deaktivierung von Umrichtereinspeisern in Abhängigkeit von einer Lastsituation vorschreiben. Auch eine Aktivierung oder Deaktivierung in Abhängigkeit von einem Leistungsaustausch des Netzabschnitts mit einem anderen Netzabschnitt, insbesondere mit einer höheren Netzebene, kann eine Aktivierungsvorschrift sein. Eine Aktivierungsvorschrift kann auch eine Aktivierung oder Deaktivierung von Umrichtereinspeisern in Abhängigkeit von installierten oder einspeisenden Kraftwerkskapazitäten sein.

Somit wird als ein Schätzkriterium der ersten Gruppe eine erfasste aktuelle Netzlast des elektrischen Versorgungsnetzes oder des Netzabschnitts vorgeschlagen. Die aktuelle Netzlast kann somit, insbesondere über eine entsprechende Vorschrift, beeinflussen, welche und/oder wie viele Umrichtereinspeiser mit dem elektrischen Versorgungsnetz verbunden sind.

Als ein Schätzkriterium der ersten Gruppe wird auch eine bekannte Anzahl angeschlossener, aber nicht einspeisender Umrichtereinspeiser vorgeschlagen. Solche angeschlossenen, aber nicht einspeisenden Umrichtereinspeiser können beispielsweise sogenannte STATCOM-Anlagen sein, oder Anlagen, insbesondere Photovoltaikanlagen, die nächtlich eine Blindleistung einspeisen, die einen Umrichter oder Wechselrichter aufweisen, mit dem sie auch in das elektrische Versorgungsnetz einspeisen können, die tatsächlich aber beispielswiese nur als Phasenschieber arbeiten. Solche nicht einspeisenden Umrichtereinspeiser sind üblicherweise in dem elektrischen Versorgungsnetz bzw. dem Netzabschnitt bekannt und können daher entsprechend berücksichtigt werden.

Außerdem oder alternativwird vorgeschlagen, dass eine dynamische Umrichterpenetration geschätzt wird in Abhängigkeit von wenigstens einem Schätzkriterium aus einer zweiten Gruppe gemäß der folgenden Liste:
Ein Schätzkriterium der zweiten Gruppe ist eine erfasste, in das elektrische Versorgungsnetz eingespeiste Leistung aus regenerativen Energiequellen. Eine solche eingespeiste Leistung ist häufig bekannt und kann beispielsweise über SCADA an eine entsprechende zentrale Steuereinheit übermittelt werden. Es kommt aber auch in Betracht, dass Umrichtereinspeiser eine solche eingespeiste Leistung als Information bereitstellen, ohne dass dies an eine Steuereinheit gegeben wird. Eine solche Information kann dann dennoch als Schätzkriterium verwendet werden. Die so erfasste eingespeiste Leistung kann entsprechend unmittelbar in die Ermittlung der dynamischen Umrichterpenetration einfließen.

Als ein weiteres Schätzkriterium der zweiten Gruppe wird eine erfasste aktuelle Netzlast des elektrischen Versorgungsnetzes oder des Netzabschnitts vorgeschlagen. Ist eine solche aktuelle Netzlast bekannt, also wie viel Leistung aktuell von den an das elektrische Versorgungsnetz angeschlossenen Verbrauchern verbraucht wird, kann daraus auch durch umrichtereingespeiste Leistung abgelesen werden, besonders wenn zusätzlich die eingespeiste Leistung konventioneller Kraftwerke bekannt ist.

Als ein Schätzkriterium aus der zweiten Gruppe wird eine erfasste Umrichterreserveleistung vorgeschlagen. Durch diese erfasste Umrichterreserveleistung kann besonders unter weiterer Berücksichtigung der aktuell einspeisbaren Leistung abgeschätzt werden, wie viel Leistung tatsächlich durch die Umrichtereinspeiser eingespeist wird, nämlich um die erfasste Umrichterreserveleistung weniger.

Zusätzlich können zur Abschätzung der dynamischen Umrichterpenetration Windgeschwindigkeiten und/oder Sonneneinstrahlung erfasst werden. Daraus ist ableitbar, wie viel Leistung die entsprechenden regenerativen Erzeuger zumindest erzeugen könnten. Zusätzlich können natürlich auch Vorschriften oder Umstände berücksichtigt werden, die zu einem Abschalten von Umrichtereinspeisern führen, wie sie oben im Zusammenhang mit der ersten Gruppe erläutert wurden. Das ist besonders dann für die Schätzung der dynamischen Umrichterpenetration von Bedeutung, wenn zwar ausreichend Leistung eingespeist werden könnte, dies aufgrund einer Abschaltvorschrift aber nicht möglich ist.

Gemäß einem Aspekt wird vorgeschlagen, dass aus einer erfassten statischen Umrichterpenetration eine Steuerungseigenschaft einer ersten Gruppe abgeleitet wird, gemäß folgender Liste. Eine solche Steuerungseigenschaft beschreibt besonders, auf welche Art und Weise das elektrische Versorgungsnetz bzw. der betrachtete Netzabschnitt steuern kann. Die Steuerungseigenschaft kann somit synonym auch als Steuerungsfähigkeit bezeichnet werden.

Hier wurde besonders erkannt, dass sich aus einer erfassten statischen Umrichterpenetration eine Steuerungseigenschaft ableiten lässt, im Grunde als intrinsische Eigenschaft des elektrischen Versorgungsnetzes bzw. des Netzabschnitts. Eine Kenntnis solcher Eigenschaften kann dann weiter für das Auswählen oder Einstellen von Steuerungsvorschriften verwendet werden. Die statische Umrichterpenetration kann unterschiedliche Werte aufweisen und theoretisch von 0 bis 100 % reichen. Entsprechend ausgeprägt ist auch die jeweilige Steuerungseigenschaft, die aus der statischen Umrichterpenetration abgeleitet wird.

Es kommt aber auch in Betracht, einen Schwellwert für die statische Umrichterpenetration zugrunde zu legen, ab dem erst eine Steuerungseigenschaft abgeleitet wird. Vorzugsweise liegt dieser Schwellwert im Bereich von 20 bis 50 %.

Eine weitere, mögliche Steuerungseigenschaft der ersten Gruppe ist ein Blindleistungsstellvermögen mit einem Blindleistungsstellbereich. Durch Umrichtereinspeiser kann das Einspeisen eines Blindleistungsanteils vergleichsweise frei vorgegeben werden und dadurch kann die Blindleistung eingestellt werden. Besonders kommt in Betracht, dass ein Umrichtereinspeiser Blindleistung von 0 bis 100 % bezogen auf den Wert seiner Nennleistung einstellen kann. Es könnte allerdings zur Gewährleistung einer hohen Effizienz eine geringere Obergrenze festgesetzt werden, von beispielsweise 80 %. Dann wäre der Blindleistungsstellbereich von 0% bis 80%, bezogen auf die Nennleistung.

Eine weitere Steuerungseigenschaft der ersten Gruppe ist eine dynamische Netzstützungseigenschaft, die durch einen einspeisbaren Kurzschlussstrom gekennzeichnet ist. Die dynamische Netzstützungseigenschaft gibt also an, wie viel Kurzschlussstrom bei Bedarf bzw. bei einer entsprechenden Situation eingespeist werden kann. Auch hier kann diese dynamische Netzstützungseigenschaft, besonders der einspeisbare Kurzschlussstrom, der Höhe nach davon abhängen, wie groß die erfasste statische Umrichterpenetration ist. Besonders für Netzfehler, bei denen die Netzspannung einbricht, die häufig aber nur sehr kurz andauern, kann das Einspeisen eines Kurzschlussstroms ein schnelles Durchsteuern des Fehlers erreichen oder zumindest dazu beitragen. Über die dynamische Netzstützungseigenschaft und damit über die erfasste statische Umrichterpenetration kann diese Eigenschaft im Vorfeld abgeschätzt werden.

Außerdem kann durch einen hinreichend großen Kurzschlussstrom ein Netztrennschalter ausgelöst werden. Dadurch kann erreicht werden, dass Teile eines Netzabschnitts getrennt werden und damit gezielt geschützt werden. Es kann damit also ein selektiver Netzschutz erreicht werden.

Als eine weitere Steuerungseigenschaft der ersten Gruppe wird ein Potential zum Bereitstellen einer Momentanreserve vorgeschlagen. Eine Momentanreserve kann besonders durch Windenergieanlagen bereitgestellt werden, sodass es vorteilhaft ist, zusätzlich zur erfassten statischen Umrichterpenetration einen Anteil an Windenergieanlagen an der statischen Umrichterpenetration abzuschätzen oder zu erfassen.

Bei einer Momentanreserve kann spontan, insbesondere innerhalb von 10 bis 20 ms, aber nur für eine kurze Zeit von 5 bis 30 Sekunden, insbesondere etwa für 10 Sekunden, eine zusätzliche Leistung eingespeist werden. Diese kann beispielsweise im Bereich von 10 bis 20 % der Nennleistung betragen. Sie wird dadurch bereitgestellt, dass der Rotor der Windenergieanlage abgebremst wird, um dadurch kinetische Energie zu entnehmen und daraus diese zusätzliche Leistung einzuspeisen. Grundsätzlich kommen aber auch elektrische Speicher als Energiequelle in Betracht, wodurch das Potential zum Bereitstellen einer Momentanreserve nicht ausschließlich einer Windenergieanlage vorbehalten wäre.

Ein Potential zum Bereitstellen einer Momentanreserve kann auch bei wenig Wind und wenig oder gar keiner eingespeisten Leistung bereitgestellt werden, wenn aber zumindest so viel Wind vorhanden ist, dass die Windenergieanlage im Leerlauf drehen kann. Dann weist die Windenergieanlage nämlich trotzdem entsprechend kinetische Energie auf und kann eine Momentanreserve, also zusätzliche Leistung aus dieser kinetischen Energie bereitstellen und einspeisen.

Als weitere Steuerungseigenschaft der ersten Gruppe wird ein Spannungsprägungsgrad vorgeschlagen, der ein Verhältnis beschreibt von spannungsprägend durch wenigstens einen Umrichtereinspeiser eingespeister Leistung zu stromprägend durch wenigstens einen Umrichtereinspeiser eingespeister Leistung. Der Spannungsprägungsgrad beschreibt dabei dieses Verhältnis, bis zu dem die Umrichtereinspeiser eine spannungsprägende Einspeisung durchführen sollen.

Hier wurde besonders erkannt, dass Umrichtereinspeiser zwar üblicherweise stromprägend einspeisen, für sie aber auch in Betracht kommt, eine spannungsprägende Einspeisung vorzusehen, wenn dies beispielsweise zur Netzführung sinnvoll erscheint. Ein solcher Spannungsprägungsgrad kann von der erfassten statischen Umrichterpenetration abgeleitet werden, unter weiterer Berücksichtigung, welche der betroffenen Umrichtereinspeiser überhaupt spannungsprägend einspeisen können. Es kommt aber auch in Betracht, dass für ein elektrisches Versorgungsnetz oder einen entsprechenden Netzabschnitt für Umrichtereinspeiser vorgesehen wird, zu einem gewissen Anteil, z. B. zu 50 %, spannungsprägend einspeisen zu können. Ist dann die statische Umrichterpenetration erfasst, kann daraus über diese beispielhaft genannten 50 % der Spannungsprägungsgrad für alle Einspeiser insgesamt abgeleitet werden.

Gemäß einem Aspekt wird vorgeschlagen, dass in Abhängigkeit von der statischen Umrichterpenetration wenigstens eine Steuerungsvorschrift einer ersten Gruppe aktiviert, deaktiviert oder eingestellt wird. Dies wird für die folgenden Steuerungsvorschriften vorgeschlagen.

Hier wird somit nicht nur eine Eigenschaft des elektrischen Versorgungsnetzes von der statischen Umrichterpenetration abgeleitet, sondern konkret wenigstens eine Steuerungsvorschrift eingesetzt. Sie wird also aktiviert bzw. deaktiviert, was unter anderem von der statischen Umrichterpenetration abhängt. Besonders in Abhängigkeit von der Höhe der statischen Umrichterpenetration wird zudem auch vorgeschlagen, dass wenigstens eine Steuervorschrift der ersten Gruppe eingestellt wird, nämlich in ihrer Höhe eingestellt wird. Diese Einstellung in der Höhe betrifft besonders Parameter einer solchen Steuerungsvorschrift und/oder einen Verstärkungsfaktor der betreffenden Steuerungsvorschrift.

Als eine Steuerungsvorschrift wird eine Blindleistungsregelung bzw. eine Spannungsregelung vorgeschlagen. Hier wird eine Spannung mithilfe einer Blindleistung geregelt, sodass beide Bezeichnungen verwendet werden können.

Besonders wird hier eine Blindleistungseinspeisung in Abhängigkeit von einer Spannungsabweichung vorgeschlagen. Diese kann besonders bei einer hohen statischen Umrichterpenetration aktiviert werden und bei einer sehr geringen deaktiviert werden. Es kann ein Verstärkungsfaktor zwischen Spannungsabweichung und der Höhe der davon abhängig einzuspeisenden Blindleistung eingestellt werden. Auch ein Totbandbereich kann eingestellt werden, der für Spannungsabweichungen einen Bereich definiert, an dem Spannungsabweichungen nicht zu einer Blindleistungseinspeisung führen. Auch eine Obergrenze und eine Untergrenze zum Begrenzen der Blindleistungseinspeisung kann eingestellt werden, nämlich in Abhängigkeit von der statischen Umrichterpenetration. Insbesondere wird vorgesehen, dass die Werte jeweils dem Betrage nach umso höher eingestellt werden, je größer die statische Umrichterpenetration ist.

Als eine Steuerungsvorschrift der ersten Gruppe wird ein Bereitstellen einer schnellen Leistungsreduktion vorgeschlagen. Besonders die Leistungsreduktion, die zu einer Leistungsaufnahme führt, bei der also elektrische Leistung von dem Umrichtereinspeiser aufgenommen und dann insbesondere durch eine Chopperschaltung verbraucht wird, kann in Abhängigkeit von der statischen Umrichterpenetration aktiviert werden. Hier wurde erkannt, dass die Höhe aufzunehmender Leistung im Wesentlichen von angeschlossenen Umrichtereinspeisern abhängt, unabhängig davon, ob und in welcher Höhe diese Umrichtereinspeiser Leistung einspeisen. Bei der Aufnahme elektrischer Leistung durch Umrichtereinspeiser können besonders die genannten Chopperschaltungen verwendet werden, die dabei aber unabhängig von der Leistungseinspeisung arbeiten können. Sie steuern lediglich einen elektrischen Strom über Widerstandsbänke, in denen dieser in Wärme umgesetzt wird.

Besonders kann dieses Bereitstellen einer schnellen Leistungsreduktion so eingestellt werden, dass diese umso höher eingestellt wird, umso mehr Leistung verbraucht werden kann, je größer die statische Umrichterpenetration ist.

Besonders kann ein solches Bereitstellen einer schnellen Leistungsreduktion zum Abbauen elektrischer Leistung, also auch zum Reduzieren der Einspeiseleistung, bei Überfrequenz eingesetzt werden. Es kommt in Betracht, dass insgesamt, also durch alle Einspeiser, weiterhin elektrische Leistung eingespeist wird, einige oder alle der Umrichtereinspeiser aber Leistung aufnehmen und damit verbrauchen. Energetisch ist eine solche Situation zwar nicht erstrebenswert, in Ausnahmefällen und insbesondere in kurzen Übergangszeiträumen kann dies aber sinnvoll sein. Insbesondere geht es hierbei um ein Bereitstellen einer schnellen Leistungsreduktion, und eine solche schnelle Leistungsreduktion kann im Bereich von 1 bis 3 Sekunden, insbesondere im Bereich unter 1 Sekunde und bevorzugt im Bereich von 10 bis 50 ms vorgenommen werden. In so kurzer Zeit können viele konventionelle Einspeiser ihre Leistung nicht signifikant reduzieren, sodass die schnelle Leistungsreduktion durch Umrichtereinspeiser bereitgestellt wird, bis entweder das Problem behoben wurde oderdie übrigen Einspeiser genug Zeit hatten, ihre Leistungseinspeisung zu reduzieren. Beispielsweise kann ein Bedarf an einer solchen schnellen Leistungsreduktion durch einen Lastabwurf entstehen, bei dem ein großer Verbraucher, wie beispielsweise eine Gießerei, spontan vom Netz getrennt wurde.

Als eine Steuerungsvorschrift der ersten Gruppe wird ein Bereitstellen einer Momentanreserve durch Windenergieanlagen als Umrichtereinspeiser vorgeschlagen, insbesondere durch Erhöhen einer Drehzahl der jeweiligen Windenergieanlage, um eine erhöhte Rotationsenergie zu erreichen. Insbesondere wird das vorgeschlagen, wenn der Umrichtereinspeiser in einem Leistungsbereich unterhalb von 40 % Nennleistung des Umrichtereinspeisers betrieben wird. Vorzugsweise wird ein solches Bereitstellen einer Momentanreserve zusammen mit dem Bereitstellen einer Spannungsprägung durch die Windenergieanlagen vorgeschlagen.

Besonders kann ein solches Bereitstellen einer Momentanreserve als gesamte Steuerungsvorschrift für mehrere Umrichtereinspeiser angeboten werden. Dieses Angebot hängt somit von der statischen Umrichterpenetration ab und das Angebot kann umso höher sein, es kann also umso mehr Momentanreserve angeboten werden, je größer die statische Umrichterpenetration ist.

Bei der Kombination mit einer Spannungsprägung kann besonders vorgesehen sein, dass diese Momentanreserve für die Umsetzung der Spannungsprägung vorgesehen ist. Ein spannungsprägendes Verhalten kann besonders viel Regelenergie benötigen, um diese Spannungsprägung zu erreichen. Diese Regelenergie kann dann durch kinetische Energie bereitgestellt werden, die wie bei der Momentanreserve aktiviert werden kann.

Als eine Steuerungsvorschrift der ersten Gruppe wird eine ganz oder teilweise Durchführung einer Spannungsprägung durch die Umrichtereinspeiser vorgeschlagen. Bei einer geringen statischen Umrichterpenetration dominieren die herkömmlichen Kraftwerke, besonders die herkömmlichen Großkraftwerke, die durch direkt gekoppelte Synchrongeneratoren einspeisen. Diese arbeiten prinzipbedingt spannungsprägend, sodass eine Spannungsprägung für die Umrichtereinspeiser nicht erforderlich ist.

Je höher aber der Anteil der Umrichtereinspeiser wird, je höher also die statische Umrichterpenetration wird, umso wichtiger kann eine ganz oder teilweise Durchführung einer Spannungsprägung durch die Umrichtereinspeiser sein. Eine teilweise Durchführung einer Spannungsprägung durch die Umrichtereinspeiser kann besonders so ausgebildet werden, dass die betreffenden Umrichtereinspeiser jeweils mehrere Umrichter aufweisen, von denen einige spannungsprägend und andere stromprägend einspeisen. Insbesondere ist vorgesehen, dass umso mehr Leistung spannungsprägend durch die Umrichtereinspeiser eingespeist wird, je größer die statische Umrichterpenetration ist.

Als eine Steuerungsvorschrift der ersten Gruppe wird das Einrichten eines Phasenschieberbetriebs durch wenigstens einen der Umrichtereinspeiser vorgeschlagen. Umso größer die statische Umrichterpenetration ist, je mehr Kapazität von Umrichtereinspeisern kann für den Phasenschieberbetrieb verwendet werden, der oben bereits erläutert wurde. Hier wurde besonders erkannt, dass bei einer hohen stationären Umrichterpenetration oftmals nicht alle Umrichtereinspeiser genutzt werden können, diese dann dennoch einen Phasenschieberbetrieb ausführen können. Damit kann trotzdem das Netz gestützt werden, insbesondere eine Spannungsregelung durchgeführt oder unterstützt werden.

Als eine Steuerungsvorschrift der ersten Gruppe wird vorgeschlagen, ein Ansteuern abgeschalteter Umrichtereinspeiser vorzunehmen, zum Einschalten der Umrichtereinspeiser und Vorhalten oder Erhöhen einer STATCOM-Funktionalität. Hier kommt besonders in Betracht, dass die statische Umrichterpenetration zusammen mit einer maximalen statischen Umrichterpenetration berücksichtigt wird. Die maximale statische Umrichterpenetration beschreibt insoweit ein Verhältnis einer Summe der Nennleistungen aller Umrichtereinspeiser, die mit dem elektrischen Versorgungsnetz bzw. dem Netzabschnitt verbunden sind oder verbunden werden können, zu einer Summe der Nennleistungen aller Einspeiser, die mit dem elektrischen Versorgungsnetz bzw. dem Netzabschnitt verbunden sind oder verbunden werden können. Auch hierwird also ein Verhältnis der Umrichtereinspeiser zu allen Einspeisern betrachtet, wobei die Summe der entsprechenden Nennleistungen berücksichtigt wird, wobei hier aber zusätzlich die Umrichtereinspeiser betrachtet werden, die insbesondere nur aufgrund eines geöffneten Trennschalters nicht mit dem elektrischen Versorgungsnetz oder dem Netzabschnitt verbunden sind. Insbesondere betrifft dies jeweils einen Trennschalter, der von extern angesteuert werden kann.

Somit kann abgeschätzt werden, wie viel Potential an Umrichtereinspeisern noch vorhanden ist, das durch Verbinden dieser Umrichtereinspeiser genutzt werden kann. Dieses Potential soll genutzt werden und besonders zum Vorhalten oder Erhöhen einer STATCOM-Funktionalität verwendet werden. Hier liegt besonders der Gedanke zugrunde, dass es einen Grund gibt, dass diese Umrichtereinspeiser abgeschaltet sind, und dieser Grund kann bedeuten, dass nicht ausreichend Primärenergie vorhanden ist, er kann aber auch bedeuten, dass das elektrische Versorgungsnetz bzw. der Netzabschnitt keinen zusätzlichen Bedarf an Leistung hat. In diesem Fall kann aber trotzdem ein Umrichtereinspeiser, oder mehrere, eine STATCOM-Funktionalität ausführen, also als Phasenschieber dienen und/oder Blindleistung einspeisen, um dadurch das Netz zu stützen.

Als eine Steuerungsvorschrift der ersten Gruppe wird eine Fehlerdurchfahrsteuerung vorgeschlagen, insbesondere ein Aktivieren einer Blindleistungsfahrweise, bei der beim Erreichen einer Stromgrenze ein Einspeisen einer Blindleistung gegenüber einem Einspeisen einer Wirkleistung priorisiert wird. Hier liegt besonders die Erkenntnis zugrunde, dass bei einer hohen statischen Umrichterpenetration ein nennenswerter Beitrag für das Durchsteuern eines Fehlers geleistet werden kann. Hier geht es besonders um das Durchsteuern eines kurzen Fehlers, bei dem für kurze Zeit, insbesondere wenige Sekunden, insbesondere unter 10 Sekunden, die Netzspannung auf einen kleinen Wert oder sogar auf null einbricht. Hier wird besonders vorgesehen, zum Durchsteuern dieses Fehlers eine Blindleistung bzw. einen Blindstrom einzuspeisen, insbesondere einen Kurzschlussstrom.

Wird weiterhin Wirkleistung eingespeist, so ist die Einspeisung der Blindleistung durch eine maximale Scheinstromgrenze stärker begrenzt als wenn keine Wirkleistung eingespeist werden würde. Die Blindleistungsfahrweise priorisiert das Einspeisen der Blindleistung insoweit, als die Wirkleistung verringert wird, wenn nur dadurch ein Erhöhen der Blindleistung bzw. des Blindstroms erreicht werden kann. Durch das Aktivieren der Fehlerdurchfahrsteuerung kann ein solches Verhalten vorbereitet sein, um dann beim Auftreten des Fehlers durchgeführt zu werden. Es wird besonders bei einer hohen statischen Umrichterpenetration aktiviert. Es kann umso höher eingestellt sein, je größer die statische Umrichterpenetration ist. Eine höhere Aktivierung bedeutet dabei, dass die Priorisierung der Blindleistung umso höher ist, je größer die statische Umrichterpenetration ist. Eine vollständige Priorisierung bedeutet somit, dass die Blindleistung zu 100 % priorisiert wird, also in jedem Fall der Wirkleistungseinspeisung vorgeht. Bei einer geringeren Priorisierung kann ein Teil der Wirkleistungseinspeisung, z. B. bis 10 % oder bis 20 %, zugelassen werden.

Gemäß einem Aspekt wird vorgeschlagen, dass aus einer erfassten dynamischen Umrichterpenetration eine Steuerungseigenschaft einer zweiten Gruppe abgeleitet wird. Die Elemente der Liste der zweiten Gruppe werden nachfolgend erläutert. Hier liegt besonders die Erkenntnis zugrunde, dass aus einer erfassten dynamischen Umrichterpenetration andere Steuerungseigenschaften abgeleitet werden können als aus der statischen Umrichterpenetration. Auch hier geht es darum, welches Steuerverhalten das elektrische Versorgungsnetz bzw. der Netzabschnitt aufweisen können und insoweit kann die Steuerungseigenschaft auch hier als Steuerungsfähigkeit bezeichnet werden.

Als eine Steuerungseigenschaft der zweiten Gruppe wird ein Bereitstellungsvermögen einer positiven Regelreserve vorgeschlagen, die bei Bedarf durch die Umrichtereinspeiser eingespeiste Wirkleistung erhöhen kann. Bei einer dynamischen Umrichterpenetration lässt sich ablesen, wie viel Leistung bzw. zu welchem Anteil Leistung aus Umrichtereinspeisern aktuell eingespeist wird. Je höher die dynamische Umrichterpenetration ist, umso höher ist damit auch die durch Umrichter eingespeiste Leistung. Damit besteht auch Potential, diese zu reduzieren und dadurch eine Regelreserve zu schaffen. Um diese reduzierte Leistung, die somit die Regelreserve darstellt, kann nämlich die eingespeiste Leistung bei Bedarf erhöht werden.

Als eine Steuerungseigenschaft der zweiten Gruppe wird auch ein Bereitstellungsvermögen einer negativen Regelreserve vorgeschlagen, die bei Bedarf durch die Umrichtereinspeiser eingespeiste Wirkleistung reduzieren kann. Auch hier gilt, dass sich aus der erfassten dynamischen Umrichterpenetration eine durch die Umrichtereinspeiser eingespeiste Wirkleistung ablesen lässt. Diese kann somit auch reduziert werden und bildet somit eine negative Regelreserve. Die negative Regelreserve bezeichnet also die Leistung, um die die Einspeisung durch die Umrichtereinspeiser reduziert werden kann. Hier wurde besonders erkannt, dass Umrichtereinspeiser, besonders was das Verringern der eingespeisten Leistung anbelangt, mit die schnellsten Regeleinheiten im elektrischen Versorgungsnetz sind. Wird beispielsweise eine Last im elektrischen Versorgungsnetz oder dem Netzabschnitt abgeworfen, so ergeben sich sofort Leistungsüberkapazitäten im Netz und diese lassen sich durch das Reduzieren der durch Umrichtereinspeiser eingespeisten Wirkleistung abbauen.

Als eine Steuerungseigenschaft der zweiten Gruppe wird ein Bereitstellungsvermögen einer Momentanreserve vorgeschlagen, die besonders für Windenergieanlagen aus Rotationsenergie eine kurzfristige Stützleistung bereitstellen kann und insbesondere eine Einstellung der verfügbaren Momentanreserve durch eine Einstellung einer Drehzahl der Windenergieanlage durchführen kann.

Aus der statischen Umrichterpenetration lässt sich bereits ein Potential für das Bereitstellen einer Momentanreserve ableiten. Aus der dynamischen Umrichterpenetration ergibt sich unmittelbar ein Bereitstellungsvermögen einer Momentanreserve. Die Momentanreserve kann also ohne vorherige Änderung etwaiger Betriebspunkte bereitgestellt werden. In dem Moment, wo sie bereitgestellt wird, wird der Betriebspunkt natürlich geändert, aber dies ist nicht unbedingt im Vorfeld erforderlich. Hier liegt besonders der Gedanke zugrunde, dass bei Windenergieanlagen zu einer eingespeisten Leistung mit guter Genauigkeit auch eine zugrundeliegende Drehzahl und damit eine vorhandene kinetische Energie bekannt ist. Besonders wird hier auch berücksichtigt, dass die Leistung teilweise mit der dritten Potenz der Drehzahl ansteigt, sodass bereits bei mittleren Leistungswerten eine vergleichsweise hohe Drehzahl vorhanden ist. Damit ist dann auch bereits eine entsprechend hohe kinetische Energie in dem Rotor vorhanden.

Es wurde aber auch erkannt, dass hier die nutzbare kinetische Energie betrachtet werden sollte, also die Energie, die aus der Rotation des Rotors gewonnen werden kann, ohne dass die Windenergieanlage dabei einen stabilen Arbeitspunkt verliert und anhält. In jedem Fall liegt aber bereits ein Bereitstellungsvermögen einer Momentanreserve selbst bei einer geringen eingespeisten Leistung vor. Somit kann sich dieses Bereitstellungsvermögen einer Momentanreserve aus der erfassten dynamischen Umrichterpenetration ablesen lassen. Es lässt sich also diese Steuerungseigenschaft oder Steuerungsfähigkeit aus der erfassten dynamischen Umrichterpenetration ablesen und sie kann dann bei entsprechenden Stützverfahren oder Einspeiseverfahren berücksichtigt werden.

Gemäß einem Aspekt wird vorgeschlagen, dass in Abhängigkeit von der dynamischen Umrichterpenetration wenigstens eine Steuerungsvorschrift einer zweiten Gruppe aktiviert, deaktiviert oder eingestellt wird. Elemente einer solchen Liste dieser zweiten Gruppe werden nachfolgend erläutert. Hierwurde auch erkannt, dass nicht nur eine Eigenschaft oder Steuerungsfähigkeit des elektrischen Versorgungsnetzes aus der dynamischen Umrichterpenetration abgeleitet werden kann, sondern dass auch konkrete Steuerungsvorschriften, oder zumindest eine davon, davon abhängig aktiviert werden können, oder umgekehrt, wenn sich die Voraussetzungen gemäß der dynamischen Umrichterpenetration wieder geändert haben, deaktiviert werden können. Es kommt auch in Betracht, die Steuerungsvorschriften einzustellen. Hier kann besonders ein Übertragungsverhalten eingestellt werden, oder Verstärkungsfaktoren, oder Zeitwerte, um nur einige Beispiele zu nennen.

Als eine Steuerungsvorschrift der zweiten Gruppe wird eine Frequenzstützungsregelung durch Einstellen einer Wirkleistungseinspeisung in Abhängigkeit von einer Netzfrequenz vorgeschlagen. Besonders kommt hier in Betracht, dass dazu ein Wirkleistungsanteil proportional zu einer Frequenzabweichung der Netzfrequenz von einem Frequenzreferenzwert, insbesondere einer Netznennfrequenz vorgeschlagen wird. Je höher die dynamische Umrichterpenetration ist, umso höher kann hier dem Betrage nach ein Verstärkungsfaktor bzw. ein Proportionalitätsfaktor zwischen Frequenzabweichung und zusätzlich eingespeistem Wirkleistungsanteil sein. Hier kommt besonders in Betracht, dass der Verstärkungsfaktor bzw. der Proportionalitätsfaktor negativ ist, oder die eingespeiste Wirkleistung anderweitig mit steigender Netzfrequenz verringert wird.

Hier liegt die Erkenntnis zugrunde, dass sich aus der dynamischen Umrichterpenetration eine Leistungseinspeisung durch Umrichtereinspeiser entnehmen lässt und damit auch Potential zum Verändern dieser Leistungseinspeisung entnehmen lässt. Die Einstellung der Frequenzstützungsregelung kann vorzugsweise zwischen Frequenzüberschreitung und Frequenzunterschreitung unterschiedlich sein. So kann dem Betrage nach bei einer negativen Frequenzabweichung ein kleinerer Proportionalitätsfaktor zwischen Frequenzabweichung und zusätzlich eingespeistem Leistungsanteil sein als bei einer positiven Frequenzabweichung.

Als eine Steuerungsvorschrift der zweiten Gruppe wird das Bereitstellen einer Momentanreserve durch Windenergieanlagen als Umrichtereinspeiser vorgeschlagen, insbesondere durch Erhöhung einer Drehzahl der jeweiligen Windenergieanlage, um eine erhöhte Rotationsenergie zu erreichen, insbesondere, wenn der Umrichtereinspeiser in einem Leistungsbereich unterhalb von 40 % seiner Nennleistung betrieben wird. Eine solche Steuerungsvorschrift zum Bereitstellen einer Momentanreserve, was auch für die oben bereits genannten Momentanreserven gilt, kann so ausgestaltet sein, dass die Momentanreserve in Abhängigkeit von einem Frequenzabfall der Netzfrequenz bereitgestellt wird, insbesondere, wenn die Netzfrequenz unter einen Grenzwert und/oder mit einem Gradienten abfällt, der dem Betrage nach über einem Grenzgradientwert eines Frequenzabfalls liegt. Hier wird besonders vorgeschlagen, eine erhöhte Rotationsenergie durch Erhöhen der Drehzahl der jeweiligen Windenergieanlage zu erreichen, und das wird insbesondere in einem Leistungsbereich unterhalb von 40 % Nennleistung des Umrichtereinspeisers, also der Windenergieanlage, vorgeschlagen.

Aus der dynamischen Umrichterpenetration zusammen mit der statischen Umrichterpenetration lässt sich auch der Leistungsbereich ablesen, mit dem die Umrichtereinspeiser aktuell einspeisen. Besonders wenn die dynamische Umrichterpenetration entsprechend geringer als die statische Umrichterpenetration ist, wird auch entsprechend weniger Leistung eingespeist. Ist der Anteil der Windenergieanlagen an der durch Umrichter eingespeisten Leistung dominierend, was besonders nachts der Fall ist, oder ist der Anteil oder eine Verteilung zumindest bekannt, lässt sich beurteilen, ob eine Drehzahlerhöhung vorgenommen werden sollte.

Dazu wurde erkannt, dass bei einer geringen Leistungseinspeisung, die nämlich unter 40 % der Nennleistung, also unter 40 % der maximal möglichen Einspeisung liegt, die Drehzahl noch vergleichsweise gering ist und damit eine Erhöhung der Drehzahl zum Erhöhen der Rotationsenergie möglich ist. Aus der dynamischen Umrichterpenetration lässt sich auch ablesen, dass Leistung durch die Umrichtereinspeiser eingespeist wird und somit auch ausreichend Wind vorliegt, um eine solche Drehzahlerhöhung durchzuführen. Dadurch kann das Bereitstellen der Momentanreserve entsprechend verbessert werden.

Hierbei und auch bei den übrigen vorstehenden und nachfolgenden Ausführungsformen ist immer zu beachten, dass hier eine Lösung für das gesamte elektrische Versorgungsnetz oder zumindest den betrachteten Netzabschnitt vorgeschlagen wird, jede Lösung für eine einzelne Anlage, also einen einzelnen Umrichtereinspeiser, sollte möglichst auch bei vielen oder allen weiteren Umrichtereinspeisern implementiert werden. Somit kann ein Gesamtkonzept vorgeschlagen werden und, um bei dem Beispiel der Momentanreserve zu bleiben, auch über eine signifikante Menge bereitstellbarer Momentanreserve verfügt werden. Auch bei den übrigen Steuerungsvorschriften, sowohl aus der ersten als auch aus der zweiten Gruppe, kann über entsprechend viel Wirkleistung, Blindleistung oder Blindstrom verfügt werden. Durch die generelle Betrachtung der statischen und dynamischen Umrichterpenetration kann somit nicht nur ein großes Potential aktiviert werden, sondern auch generell bei der Netzstützung berücksichtigt werden.

Als eine weitere Steuerungsvorschrift der zweiten Gruppe wird ein Durchführen einer Leistungserhöhung durch Umrichtereinspeiser beim Auftreten einer Netzfrequenz unterhalb einer Netznennfrequenz vorgeschlagen, insbesondere beim Auftreten einer Unterfrequenz. Hier wird somit speziell eine entsprechende Vorschrift vorgeschlagen, die die Leistungseinspeisung bei einer Unterfrequenz erhöht. Eine Unterfrequenz kann besonders eine Frequenz sein, die um einen vorbestimmten Mindestabweichungswert unterhalb der Netznennfrequenz liegt. Die Leistungserhöhung kann durch das Einspeisen einer Momentanreserve oder durch das Zurücknehmen einer Leistungseinsenkung realisiert werden.

Als eine weitere Steuerungsvorschrift der zweiten Gruppe wird ein Durchführen einer Leistungsreduzierung durch Umrichtereinspeiser beim Auftreten einer Netzfrequenz oberhalb einer Netznennfrequenz vorgeschlagen, insbesondere ohne Verwendung eines Chopperbetriebs.

Hier geht es somit um das Durchführen einer Leistungsreduzierung, bei der positive Leistung reduziert wird. Es wird also eingespeiste Leistung maximal auf den Wert null reduziert. Das schließt allerdings nicht aus, dass die oben beschriebene Möglichkeit, auch Leistung aufzunehmen, nicht zusätzlich durchgeführt werden könnte. Hier wird aber vorgeschlagen, dass in Abhängigkeit von der dynamischen Umrichterpenetration eine solche positive Leistungsreduzierung aktiviert wird. Aus der dynamischen Umrichterpenetration lässt sich die eingespeiste Leistung entnehmen und damit auch das Potential, um welchen Wert die Leistung maximal reduziert werden kann.

Als eine weitere Steuerungsvorschrift der zweiten Gruppe wird eine von der Netzfrequenz abhängige Regelung von mit dem elektrischen Versorgungsnetz verbundenen Lasten vorgeschlagen. Hierwurde erkannt, dass die Lasten, also an das elektrische Versorgungsnetz bzw. den betrachteten Netzabschnitt angeschlossene Verbraucher, ebenfalls zur Netzstützung gesteuert werden können. Je nach Verbraucher kann die von diesem aufgenommene Leistung erhöht oder verringert werden. Manche Verbraucher, wie beispielsweise ein Kühlhaus, können eine Zeitlang mit weniger Leistung auskommen, da sie meist eine hohe thermische Kapazität aufweisen, sodass eine Unterbrechung oder Verringerung der Kühlung eine Zeitlang unproblematisch ist. Ebenso können sie auch ihre Leistung zeitweise erhöhen, um eine etwas stärkere Kühlleistung zu erbringen, wodurch sie später mit weniger Leistung auskommen.

Weitere Beispiele können elektrische Speicher bzw. Ladestationen sein, die ihre Ladeleistung verringern oder unterbrechen können, wodurch das Laden der entsprechenden elektrischen Speicher verzögert wird. Je nachdem, wann dieser elektrische Speicher eingesetzt werden soll, kann eine solche Verzögerung ohne Weiteres hinnehmbar sein.

Hier liegt auch die Erkenntnis zugrunde, dass mit dem elektrischen Versorgungsnetz verbundene Lasten häufig ebenfalls schnelle Regelungseinheiten sein können. Sofern sie ausreichend angesteuert sind bzw. angesteuert werden können, können sie meist schnell reagieren und damit verbraucherseitig eine Leistungsänderung kompensieren, die ein Großkraftwerk nicht so schnell kompensieren kann. Die Kompensation einer solchen veränderten Leistung durch Verbraucher ist aber vorzugsweise vorübergehend, nämlich insbesondere für eine Zeit, die langsame Einspeiser im elektrischen Versorgungsnetz für ihre Anpassung benötigen.

Hier wird besonders vorgeschlagen, dass eine von der Netzfrequenz abhängige Regelung der Lasten bzw. Verbraucher durchgeführt wird, wenn die dynamische Umrichterpenetration gering ist. In diesem Fall können die Umrichtereinspeiser nur in geringerem Umfang eine schnelle Regelung, insbesondere eine schnelle Veränderung der Leistungseinspeisung, durchführen und somit kann dies durch die Verbraucher kompensiert werden.

Vorzugsweise wird aber eine Regelung, bei der die Lasten ihren Verbrauch verringern, bei einer hohen dynamischen Umrichterpenetration vorgeschlagen, besonders dann, wenn die dynamische Umrichterpenetration den Wert der statischen Umrichterpenetration erreicht, oder zumindest fast erreicht, nämlich wenigstens bis auf 10 % Abweichung erreicht. Dann ist nämlich eine Erhöhung der durch die Umrichtereinspeiser eingespeisten Leistung kaum möglich und das kann durch eine Verringerung der verbrauchten Leistung durch die Verbraucher bzw. Lasten kompensiert werden.

Außerdem wird als Steuerungsvorschrift der zweiten Gruppe eine Fehlerdurchfahrsteuerung vorgesehen, insbesondere ein Aktivieren einer Wirkleistungsfahrweise, bei der beim Erreichen einer Stromgrenze ein Einspeisen einer Wirkleistung gegenüber einem Einspeisen einer Blindleistung priorisiert wird.

Hier wurde besonders erkannt, dass es je nach durchfahrenem Fehler wichtig ist, eine Wirkleistung einzuspeisen. Das wird durch die Umrichtereinspeiser besonders dann möglich sein, wenn diese viel Leistung aktuell einspeisen, wenn also eine hohe dynamische Umrichterpenetration vorliegt. Hier kann zusätzlich vorgesehen sein, dass die Wirkleistung priorisiert wird, sodass bei gleichzeitiger Anforderung einer Wirkleistung und einer Blindleistung der Wirkleistung der Vorzug gegeben wird. Hierbei kann die Blindleistung bis auf null reduziert werden, was auch von der gewählten Priorisierung abhängen kann.

Auch hier wird vorgeschlagen, dass die Priorisierung in Abhängigkeit von der dynamischen Umrichterpenetration gewählt werden kann. Je höher die dynamische Umrichterpenetration ist, umso stärker wird die Wirkleistung gegenüber der Blindleistung priorisiert. Der noch zugelassene Blindleistungsanteil wird also umso kleiner gewählt, je größer die Priorisierung der Wirkleistung ist, je größer also die dynamische Umrichterpenetration ist. Hier wurde besonders erkannt, dass erst bei einer sehr hohen dynamischen Umrichterpenetration überhaupt mit einer dauerhaften Ausreizung von Stromgrenzen durch die Wirkleistungseinspeisung gerechnet werden kann und somit erst bei einer hohen dynamischen Umrichterpenetration eine starke Priorisierung der Wirkleistung sinnvoll ist. Hier wurde auch erkannt, dass für die Wirkleistung P, die Blindleistung Q und die resultierende Scheinleistung S folgender Zusammenhang gilt: P² + Q² = S². Liegt also keine maximale Priorisierung der Wirkleistung vor, wird also beispielsweise eine Blindleistung von bis zu 10 % zugelassen, beeinträchtigt dies die maximale Wirkleistung nur um weniger als 1 %.

Erfindungsgemäß wird zudem ein Windenergiesystem vorgeschlagen mit einer oder mehreren Windenergieanlagen, zum Einspeisen elektrischer Leistung in ein elektrisches Versorgungsnetz. Das Windenergiesystem bezeichnet insbesondere eine Windenergieanlage oder einen Windpark. Das elektrische Versorgungsnetz ist so ausgebildet, wie im Zusammenhang mit dem Verfahren zum Einspeisen elektrischer Leistung erläutert wurde. Das Windenergiesystem weist zudem eine Steuerungseinrichtung auf, durch die das Einspeisen gemäß einer Steuerungsstrategie gesteuert wird, und diese Steuerungsstrategie wird in Abhängigkeit von einer statischen Umrichterpenetration und einer dynamischen Umrichterpenetration ausgewählt. Die Steuerungsstrategie kann dafür beispielsweise als Steuerung in der Steuerungseinrichtung implementiert sein. Dazu kann ein Prozessrechner vorgesehen sein, auf dem eine entsprechende Steuerung implementiert ist. Das Windenergiesystem ist als Umrichtereinspeiser ausgebildet, und die Steuerungseinrichtung kann zur Steuerung mit dem wenigstens einen Frequenzumrichter bzw. Frequenzwechselrichter verbunden sein. Dadurch kann die Steuerungseinrichtung über den wenigstens einen Frequenzumrichter oder Frequenzwechselrichter das Einspeisen in Abhängigkeit von einer statischen Umrichterpenetration und in Abhängigkeit von einer dynamischen Umrichterpenetration steuern.

Es ist hierzu und auch zu allen vorstehend genannten Verfahren zum Einspeisen elektrischer Leistung in ein elektrisches Versorgungsnetz zu beachten, dass viele Steuerungsschritte oder auch Vorbereitungen für Steuerungen durch einen Umrichtereinspeiser durchgeführt werden, wie das ebenfalls erfindungsgemäß vorgeschlagene Windenergiesystem. Grundsätzlich wird aber vorgeschlagen, eine statische Umrichterpenetration und eine dynamische Umrichterpenetration zu berücksichtigen, und dies kann weit mehr als nur einen Umrichtereinspeiser bzw. ein Windenergiesystem betreffen. In diesem Fall kommt insbesondere in Betracht, dass mehrere Umrichtereinspeiser gleichzeitig in der Art und Weise gesteuert werden, wie jeweils erläutert wurde. Besonders vorteilhaft ist es, eine solche Koordination vorzunehmen, um dadurch durch eine große Anzahl von Umrichtereinspeisern ein großes Steuerpotential zu erreichen, nämlich viel Leistung zum Steuern zur Verfügung zu haben bzw. steuern zu können.

Hier ist besonders vorgesehen, eine Koordination über eine zentrale Steuereinheit für alle betroffenen Umrichtereinspeiser vorzusehen. Diese zentrale Steuereinheit kann auch das Steuern von Lasten beinhalten. Das Steuern durch eine solche zentrale Steuereinheit kann besonders so aussehen, dass die betreffenden Einheiten, also die Umrichtereinspeiser und optional die Lasten bzw. Verbraucher, entsprechende Sollwerte bekommen. Solche Sollwerte können besonders Informationen zum Auswählen oder Einstellen von Steuerungsvorschriften sein. Sie können auch Informationen über Steuerungseigenschaften bzw. Steuerungsfähigkeiten beinhalten. Die Einheiten können sich dann gegebenenfalls von sich aus darauf einstellen und die so erfassten Netzeigenschaften berücksichtigen.

Das Windenergiesystem kann eine oder mehrere Windenergieanlagen aufweisen. Besonders spannungs- und frequenzabhängige Verhalten des Einspeisens können unmittelbar an dem jeweiligen Frequenzumrichter oder Frequenzwechselrichter ausgeführt werden. Das wird besonders für Verhalten vorgesehen, die sehr schnell arbeiten müssen, wie beispielsweise die erläuterte schnelle Leistungsreduktion als auch das Bereitstellen einer Momentanreserve, um einige Beispiele zu nennen. Jeder Frequenzumrichter oder Frequenzwechselrichter kann dazu eine eigene Steuereinheit aufweisen.

Die Steuerungseinrichtung, die an einer zentralen Stelle des Windenergiesystems vorgesehen sein kann, wird dann besonders zur Koordinierung verwendet. Wenn das Windenergiesystem mehrere Windenergieanlagen aufweist, kann diese Steuerungseinrichtung als sogenannter Parkregler ausgebildet sein, der entsprechende Sollwerte an die einzelnen Windenergieanlagen und damit an die einzelnen Frequenzumrichter oder Frequenzwechselrichter überträgt. Solche Sollwerte können auch Befehle zum Aktivieren, Deaktivieren oder Einstellen von Steuerungsvorschriften beinhalten. Sie können auch Informationen über abgeleitete Steuerungseigenschaften oder Steuerungsfähigkeiten des elektrischen Versorgungsnetzes bzw. des Netzabschnitts beinhalten.

Gemäß einem Aspekt wird ein Windenergiesystem vorgeschlagen, das eine Datenschnittstelle aufweist, die vorbereitet ist zum Austauschen von Steuerinformationen aus der Liste, die eine erfasste statische Umrichterpenetration, eine erfasste dynamische Umrichterpenetration, Steuereigenschaften und Steuervorschriften aufweist. Die Datenschnittstelle kann insbesondere dadurch für diesen Austausch vorbereitet sein, dass sie mit entsprechenden Verbindungsleitungen oder Sende- und Empfangseinheiten für eine drahtlose Datenübertragung ausgestattet ist. Außerdem ist die Datenschnittstelle dazu vorbereitet, ein Datenprotokoll lesen und/oder schreiben zu können, mit dem der Austausch durchgeführt wird. Darüber hinaus ist die Datenschnittstelle intern mit der Steuerungseinrichtung verbunden, um darüber die Steuerinformationen an die Steuerungseinrichtung weiterzuleiten bzw. von dort zum Versenden zu empfangen.

Außerdem oder alternativ wird vorgeschlagen, dass die Steuerungseinrichtung dazu vorbereitet ist, eine, mehrere oder alle der Steuerinformationen zum Übertragen zu erzeugen und außerdem oder stattdessen zum Steuern des Einspeisens auszuwerten. Es kommt auch eine Kombination in Betracht, bei der die Steuerungseinrichtung einige Informationen empfängt und andere erzeugt und ausgibt. Besonders kommt in Betracht, dass die Steuerungseinrichtung eine erfasste statische Umrichterpenetration als Information erhält und eine erfasste dynamische Umrichterpenetration als Information erhält und daraus die Steuerungseigenschaften und Steuerungsvorschriften, oder einen Teil davon, erzeugt. Dazu können die Kriterien in der Steuerungseinrichtung implementiert sein, die vorstehend gemäß den entsprechenden Ausführungsformen erläutert wurden. Das Ergebnis kann ausgegeben und über die Datenschnittstelle an andere Einheiten versendet werden. Die Auswertung kann natürlich auch von der Steuerungseinrichtung selbst zum Steuern des Einspeisens verwendet werden.

Es kommt aber auch in Betracht, dass Informationen gesammelt werden, aus denen erst die statische Umrichterpenetration und die dynamische Umrichterpenetration ermittelt wird. Dann erfolgt zumindest der letzte Schritt des Erfassens dieser beiden Umrichterpenetrationen in der Steuerungseinrichtung. Die Steuerungseinrichtung kann entsprechend dazu vorbereitet sein, indem die jeweiligen Schritte dort besonders als Programm implementiert sind.

Gemäß einem Aspekt wird vorgeschlagen, dass das Windenergiesystem, insbesondere seine Steuerungseinrichtung, dazu vorbereitet ist, wenigstens ein Verfahren gemäß einer der vorstehend beschriebenen Ausführungsformen auszuführen. Das kann also insbesondere durch eine entsprechende Implementierung von Programmen aus der Steuerungseinrichtung erfolgen. Soweit die Steuerungsschritte gar nicht in dem Windenergiesystem ausgeführt werden, wie insbesondere die Steuerung von Lasten bzw. Verbrauchern, kann die Steuerungseinrichtung entsprechende Steuerungsbefehle oder andere Informationen generieren und besonders mittels der Datenschnittstelle an die Einheiten übertragen, an denen die Steuerung ausgeführt werden soll.

Nachfolgend wird die Erfindung beispielhaft anhand von Ausführungsformen unter Bezugnahme auf die begleitenden Figuren näher erläutert.
- Figur 1: zeigt eine Windenergieanlage in einer perspektivischen Darstellung.
- Figur 2: zeigt einen Windpark in einer schematischen Darstellung.
- Figur 3: zeigt schematisch einen Netzabschnitt mit mehreren exemplarischen Verbrauchern und Erzeugern.
- Figur 4: zeigt schematisch einen erweiterten Ablaufplan.

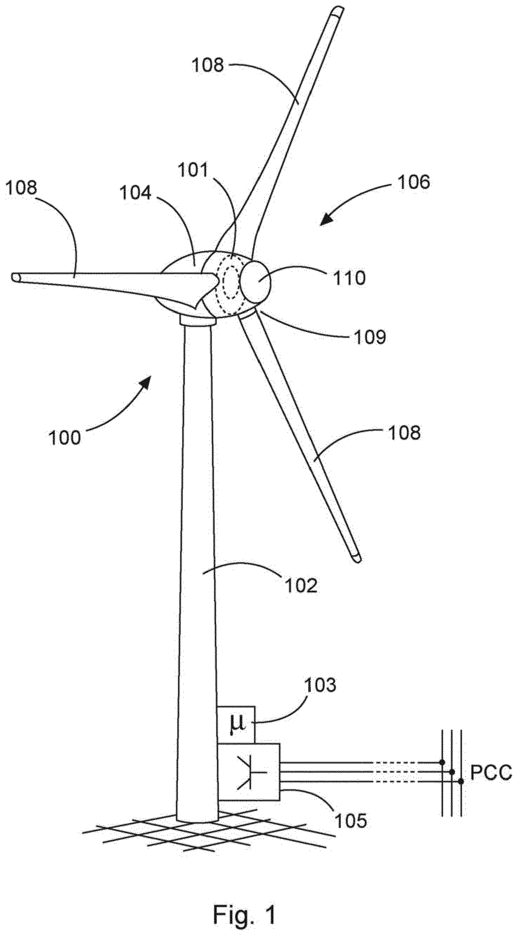

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten. Die Anlagensteuerung 103 kann eine Steuereinrichtung bilden oder beinhalten, die auch synonym als Steuereinheit bezeichnet werden kann.

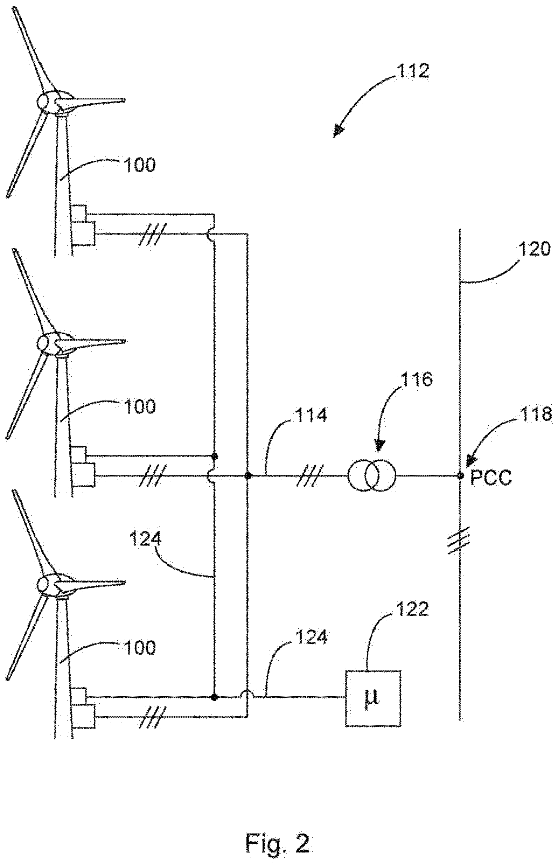

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Figur2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf, der synonym auch als zentrale Parksteuerung bezeichnet werden kann und der eine Steuereinrichtung bzw. Steuereinheit bilden oder beinhalten kann. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

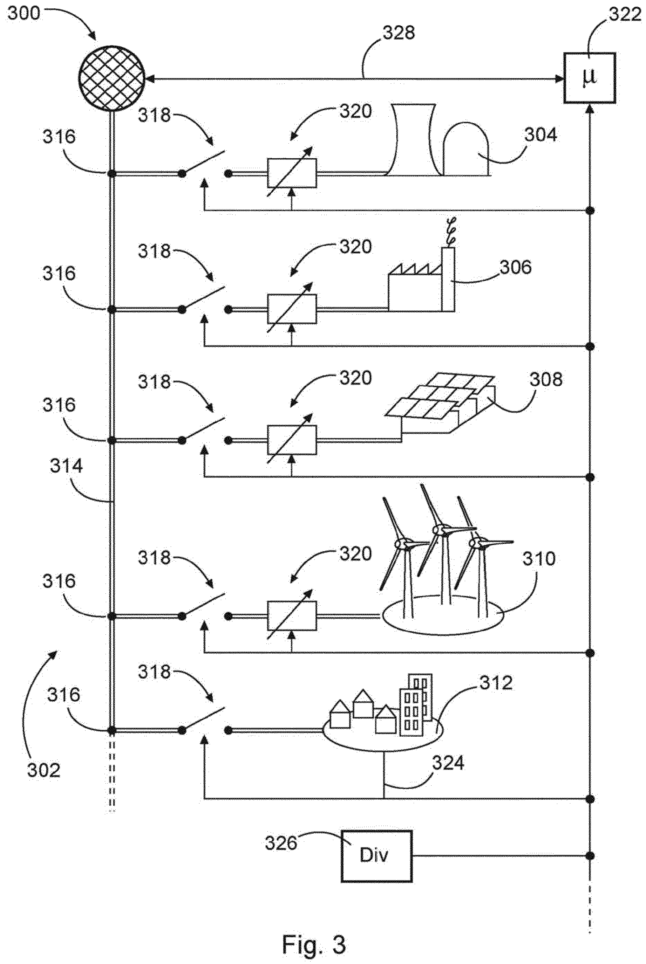

Figur 3 zeigt einen Netzabschnitt 302, der Teil eines elektrischen Versorgungsnetzes 300 ist. Das elektrische Versorgungsnetz 300 ist hier symbolisch dargestellt und kann dem elektrischen Versorgungsnetz 120 der Figur 2 entsprechen. Der exemplarische Netzabschnitt 302 weist ein Großkraftwerk 304 als Beispiel für einen konventionellen Einspeiser auf. Weiterhin ist eine Fabrik 306 als Beispiel für einen Verbraucher, nämlich einen steuerbaren Verbraucher vorgesehen. Eine Photovoltaikanlage 308 sowie ein Windpark 310 bilden jeweils einen Einspeiser, nämlich einen Umrichtereinspeiser. Schließlich ist noch eine Stadt 312 eingezeichnet, die einen Verbraucher bildet, nämlich einen nicht steuerbaren.

Jeder der genannten Verbraucher und Erzeuger ist an einen exemplarischen Versorgungsstrang 314 angeschlossen. Darüber kann jeweils an einem Netzanschlusspunkt 316 elektrische Leistung in den Übertragungsstrang 314 eingespeist bzw. daraus entnommen werden. Üblicherweise dürfte ein solcher Netzanschlusspunkt 316 über einen Transformator verfügen, um generelle Spannungsunterschiede zwischen der Spannung in dem Übertragungsstrang 314 und dem angeschlossenen Verbraucher bzw. Erzeuger zu transformieren.

Häufig ist auch ein Großkraftwerk wie das Großkraftwerk 304 an eine Übertragungsleitung mit einer anderen grundsätzlichen Spannungshöhe angeschlossen als eine Stadt wie die Stadt 312. Zur Vereinfachung wurden solche Details hier weggelassen und ebenfalls zur Vereinfachung alle Netzanschlusspunkte 316 mit eben diesen Bezugszeichen versehen, obwohl sie sich unterscheiden können. Im Übrigen ist der Übertragungsstrang 314 sowie andere Verbindungsleitungen zwischen den Erzeugern bzw. Verbrauchern als Doppelstriche dargestellt, um zu verdeutlichen, dass diese Leitungen bzw. Stränge zur Energieübertragung vorgesehen sind. In Abgrenzung dazu sind Datenleitungen mit einfacher Linie dargestellt.

Sämtliche in der Figur 3 dargestellten Verbraucher und Einspeiser sind zudem über einen Netztrennschalter 318 mit dem Übertragungsstrang 314 gekoppelt. Auch diese Netztrennschalter 318 können sich unterscheiden, insbesondere in der Leistung, die sie übertragen bzw. trennen können und der Spannung, für die sie ausgelegt sind. Dennoch ist zur Vereinfachung für alle Netztrennschalter dasselbe Bezugszeichen 318 gewählt worden. Im regulären Betrieb des Netzabschnitts 302 sollten die meisten oder alle Trennschalter 318 geschlossen sein. Sie können aber geöffnet werden und die geöffnete Darstellung der Figur 3 dient lediglich dazu, den jeweiligen Netztrennschalter 318 besser erkennbar zu machen. Daraus ist keine bevorzugte Schalterstellung abzuleiten.

Bis auf die Stadt 312 sind alle Erzeuger und die Fabrik 306 als steuerbarer Verbraucher über ein Steuermittel 320 gekoppelt. Das Steuermittel 320 soll veranschaulichen, dass die zwischen dem Übertragungsstrang 314 und dem jeweiligen Einspeiser bzw. Erzeuger austauschbare Leistung einstellbar ist. Das Steuermittel 320 soll auch verdeutlichen, dass eine eingestellte Leistungsübertragung des jeweiligen Erzeugers bzw. des Verbrauchers darüber auch erfasst werden kann. Diese Steuermittel 320 dienen aber im Wesentlichen der Veranschaulichung und tatsächlich wird das Einstellen einer zu übertragenden Leistung jeweils in den entsprechenden Erzeugern bzw. dem entsprechenden Verbraucher durchgeführt. Besonders bei den Umrichtereinspeisern, also der Photovoltaikanlage 308 und dem Windpark 310, kommt eine Einstellung und auch Erfassung sinngemäß wie in den Figuren 1 und 2 geschildert in Betracht. Beim Großkraftwerk 304 dürfte eine Einstellung im Wesentlichen über die Einstellung eines Dampfeintrags in eine Dampfturbine durchgeführt werden, um ein Beispiel zu nennen.

Jeder Netztrennschalter 318 und jedes Steuermittel 320 sind mit einer Steuerungseinrichtung verbunden, die hier als zentrale Steuereinheit 322 ausgeführt ist. Die zentrale Steuereinheit 322 kann somit Informationen über die Schalterstellung jedes Netztrennschalters 318 erhalten und verarbeiten und ebenfalls Informationen über die jeweils ausgetauschte Leistung. Diese Informationen erhält die zentrale Steuereinheit 322 exemplarisch jeweils von dem Steuermittel 320. Das soll aber exemplarisch dafür stehen, dass diese und auch andere Informationen zwischen dem jeweiligen Einspeiser bzw. Verbraucher ausgetauscht werden können. Der gegenseitige Austausch ist auch dadurch symbolisiert, dass sämtliche Datenverbindungen zwischen der zentralen Steuereinheit 322 einerseits und den Netztrennschaltern 318 und Steuermitteln 320 andererseits als Doppelpfeile dargestellt sind. In diesem Sinne ist noch eine eindirektionale Leitung 324 zur Stadt 312 dargestellt, um zu veranschaulichen, dass auch in Betracht kommt, dass dort nur einseitig Informationen von der Stadt aufgenommen und an die zentrale Steuereinheit 322 übertragen werden. Aber natürlich kommt auch in Betracht, dass einzelne Verbraucher in der Stadt 312 durch die zentrale Steuereinheit 322 gesteuert werden könnten.

Schließlich ist auch noch eine Informationsquelle 326 für diverse Informationen symbolisch in Figur 3 eingezeichnet. Eine solche Informationsquelle kann auch für mehrere Informationsquellen stehen und kann die zentrale Steuereinheit 322 mit diversen Informationen versorgen. Darunter kann eine Wettervorhersage fallen, sodass dann die Informationsquelle 326 bzw. ein Teil davon für einen Wetterdienst steht. Es kommt aber auch in Betracht, beispielsweise Informationen eines Direktvermarkters zu verwenden, der Informationen über eine vorgesehene Leistungsentnahme verschiedener Verbraucher des elektrischen Versorgungsnetzes kennt.

Zusätzlich zu den gezeigten Steuerungsmöglichkeiten durch die zentrale Steuereinheit 322 ist auch noch eine Steuerdatenleitung 328 vorgesehen, über die weitere Elemente in dem elektrischen Versorgungsnetz 300 bzw. dem Netzabschnitt 302 gesteuert werden können. Auch die Steuerdatenleitung 328 ist zum bidirektionalen Betrieb vorgesehen, sodass die zentrale Steuereinheit 322 auch Informationen aus dem elektrischen Versorgungsnetz 300 bzw. dem Netzabschnitt 302 empfangen kann. Solche Informationen können beispielsweise Schaltzustände von weiteren Netztrennschaltern sein, die Netzabschnitte innerhalb des elektrischen Versorgungsnetzes 300 schalten. Solche weiteren Netztrennschalter können auch über die zentrale Steuereinheit 322 angesteuert werden.

Zu der zentralen Steuereinheit 322 kommt auch in Betracht, dass sie beispielsweise in einem Windpark wie dem Windpark 310 angeordnet ist. Beispielsweise kann ein leistungsstarker Rechner in einem solchen Windpark, der zudem mit vielen Elementen im elektrischen Versorgungsnetz gekoppelt ist, die Aufgabe der zentralen Steuereinheit 322 übernehmen.

Figur 3 ist insoweit schematischer Natur und es kann auch vorgesehen sein, dass nicht jeder Einspeiser oder jeder Verbraucher mit der zentralen Steuereinheit 322 verbunden ist. Informationen über Einspeiser oder Verbraucher, die nicht mit der zentralen Steuereinheit 322 verbunden sind, können zum Beispiel aus den übrigen Einspeisern oder Verbrauchern geschätzt werden. Laufen beispielsweise alle Windparks mit Nennleistung, ist anzunehmen, dass ein weiterer, nicht mit der zentralen Steuereinheit 322 verbundener Windpark ebenfalls mit Nennleistung läuft. Gleiches gilt bei einem entsprechend reduzierten Betrieb.

Insoweit ein Einspeiser oder Verbraucher nicht über die zentrale Steuereinheit 322 gesteuert werden kann, ist er entsprechend in dem Steuerkonzept zu berücksichtigen. Das bedeutet einerseits, dass er nicht unmittelbar angesteuert werden kann, dass sein Verhalten dennoch berücksichtigt werden kann. Ist beispielsweise ein weiterer Windpark vorhanden, der aber nicht angesteuert werden kann, sollte aber bekannt sein, dass ein solcher Windpark vorhandene Netzvorschriften umsetzt bzw. es kann konkret bekannt sein, welche Vorschriften dieser Windpark wie umsetzt. Dazu gehört beispielsweise, wie ein solcher Windpark auf einen Spannungseinbruch reagiert.

Gleichzeitig kann ein konventionelles Kraftwerk vorgesehen sein, das ebenfalls nicht über die zentrale Steuereinheit 322 angesteuert werden kann. Zu einem solchen Großkraftwerk wäre dann ebenfalls bekannt, wie es sich in dem genannten Beispiel eines Spannungseinbruchs verhält. All das kann also trotzdem bei der vorgesehenen Steuerung beim Einspeisen elektrischer Leistung in das elektrische Versorgungsnetz berücksichtigt werden.

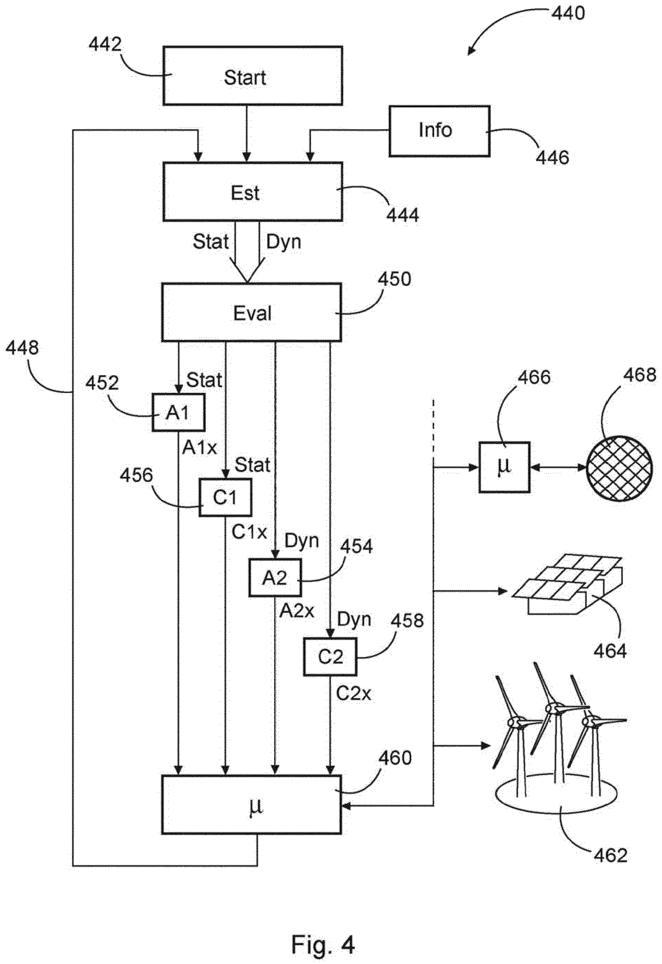

Figur 4 zeigt ein erweitertes Flussdiagramm 440. Dieses Flussdiagramm wird als erweitertes Flussdiagramm 440 bezeichnet, weil symbolisch zusätzlich eine Verknüpfung zu Elementen eines elektrischen Versorgungsnetzes eingezeichnet ist.

Das erweiterte Flussdiagramm 440 beginnt mit einem Startblock 442. Damit kann das System initialisiert werden. Es können dadurch auch Anfangsinformationen bereitgestellt werden, die verwendet werden können, wenn keine aktuellen Informationen vorliegen, insbesondere, wenn zu Beginn keine aktuellen Informationen vorliegen.

Gemäß dem Flussdiagramm werden dann in dem Schätzblock 444 eine statische und eine dynamische Umrichterpenetration geschätzt. Dies kann aufgrund von Informationen erfolgen, die von extern eingegeben werden. Hierzu gehören besonders konkrete Informationen zu Nennleistungen von Erzeugern, zu aktuell eingespeisten Leistungswerten und zu Schalterstellungen von Netztrennschaltern. Die Information kann wie in Figur 3 für die zentrale Steuereinheit 322 erläutert, aufgenommen werden. Hier kommen besonders zwei grundsätzliche Möglichkeiten in Betracht, nämlich zum einen über einen Infoblock 446 generelle Informationen aufzunehmen, wie sie zu der Informationsquelle 326 in Figur 3 erläutert wurde. Zum anderen können Informationen über Einspeiser, Verbraucher und Netztrennschalter dieser Einspeiser und Verbraucher im laufenden Prozess über die Rückführverbindung 448 erhalten werden. Das wird weiter unten noch beschrieben.

Jedenfalls wird in dem Schätzblock 444 die statische Umrichterpenetration und die dynamische Umrichterpenetration geschätzt. Sofern entsprechend vollständige Informationen vorliegen, kann die statische Umrichterpenetration und/oder die dynamische Umrichterpenetration jeweils auch berechnet werden.

Das Ergebnis wird dann in den Evaluierungsblock 450 gegeben, der die weitere Auswertung steuert. Die weitere Auswertung kann dabei besonders durch einen ersten und zweiten Attributblock 452 und 454 sowie einen ersten und zweiten Steuerblock 456 und 458 umgesetzt werden.

Der erste Attributblock 452 erhält von dem Evaluierungsblock 450 die ermittelte statische Umrichterpenetration und bestimmt abhängig davon Steuerungseigenschaften bzw. Steuerungsfähigkeiten einer ersten Gruppe. Eine Steuerungseigenschaft einer ersten Gruppe wird in dem Attributblock 452 als A1 symbolisiert. Dazu kann der Attributblock 452 verschiedene Steuerungseigenschaften derersten Gruppe ausgeben, die als A1xsymbolisiert werden, mit "x" als veränderlichem Index. Entsprechend erhält der erste Steuerblock 456 ebenfalls die ermittelte statische Umrichterpenetration, leitet daraus aber keine Steuerungseigenschaften oder -fähigkeiten des elektrischen Versorgungsnetzes ab, sondern konkrete Steuerungsvorschriften, die als Steuerungsvorschriften einer ersten Gruppe bezeichnet werden. Zur Verfügung stehende Steuerungsvorschriften der ersten Gruppe sind in dem ersten Steuerblock 456 als C1 symbolisiert, es können aber mehrere bzw. unterschiedliche konkrete Steuerungsvorschriften ausgegeben werden, was durch C1xgekennzeichnet ist, auch hier mit "x" als veränderlichem Index.

Sinngemäß erhält der zweite Attributblock 454 die ermittelte dynamische Umrichterpenetration und bestimmt davon abhängig wenigstens eine Steuerungseigenschaft bzw. Steuerungsfähigkeit einer zweiten Gruppe. Und der zweite Steuerblock 458 erhält ebenfalls die ermittelte dynamische Umrichterpenetration und bestimmt daraus wenigstens eine konkrete Steuerungsvorschrift einer zweiten Gruppe. Die so ermittelten Steuerungseigenschaften der ersten und zweiten Gruppe und Steuerungsvorschriften der ersten und zweiten Gruppe werden dann an den Steuerungsblock 460 zur Umsetzung gegeben.

Der Steuerungsblock 460 kommuniziert dazu wenigstens mit einem Windpark 462, einer Photovoltaikanlage 464 und einer zentralen Steuereinheit 466. Die zentrale Steuereinheit 466 kann der zentralen Steuereinheit 322 der Figur 3 entsprechen und entsprechend Informationen verarbeiten und selbst auch bereitstellen. Entsprechend ist auch symbolisch eine Verbindung zu einem elektrischen Versorgungsnetz 468 dargestellt. Der Steuerungsblock 460 kann somit Informationen an die gezeigten Einheiten übertragen, Steuerungsvorschriften übertragen und dadurch implementieren, als auch selbst Informationen erhalten.

Das Übertragen von Steuerungsvorschriften kann besonders so ausgestaltet sein, dass entsprechend infrage kommende Steuerungsvorschriften bereits in den jeweiligen Elementen, also besonders dem beispielhaften Windpark 462 und der beispielhaften Photovoltaikanlage 464 implementiert sind und durch den Steuerungsblock 460 aktiviert werden. Die Aktivierung kann auch beinhalten, dass konkrete Einstellparameter für die entsprechende Steuerungsvorschrift übertragen werden, um dadurch beispielsweise Verstärkungsfaktoren oder relevante Zeiten einzustellen. In gleicher Art und Weise kann auch vorgesehen sein, dass eine oder mehrere Steuerungsvorschriften in der zentralen Steuereinheit 466 hinterlegt sind und durch den Steuerungsblock 460 aktiviert werden. Dann kommt auch in Betracht, dass die zentrale Steuereinheit 466 eine Ansteuerung der relevanten Einheiten vornimmt, einschließlich der Photovoltaikanlage 464 oder des Windparks 462.

Die Information, die der Steuerungsblock 460 dabei außerdem sammelt, kann er über die Rückführverbindung 448 dem Schätzblock 444 übergeben. Die Rückführverbindung 448 steht zudem auch für die Veranschaulichung, dass der in Figur 4 veranschaulichte Ablauf in einer Schleife wiederkehrend durchgeführt wird, z. B. alle Minute oder alle fünf Minuten oder wenigstens alle Viertelstunde, um ein paar Beispiele zu nennen.

## Patentansprüche

1. Verfahren zum Einspeisen elektrischer Leistung in ein elektrisches Versorgungsnetz, und das elektrische Versorgungsnetz (120, 300, 468) umfasst
- mehrere Verbraucher (306, 312) zum Verbrauchen elektrischer Leistung aus dem elektrischen Versorgungsnetz (120, 300, 468), und
- mehrere Einspeiser (304, 308) zum Einspeisen elektrischer Leistung in das elektrische Versorgungsnetz (120, 300, 468), wobei
ein Einspeiser als Umrichtereinspeiser oder als konventioneller Einspeiser vorgesehen sein kann, und jeweils durch eine Nennleistung gekennzeichnet ist, wobei
- ein Umrichtereinspeiser einen Einspeiser bezeichnet, der mittels wenigstens eines Frequenzumrichters oder Frequenzwechselrichters einspeist, und
- ein konventioneller Einspeiser alle übrigen Einspeiser bezeichnet,
- das Einspeisen in Abhängigkeit von
- einer statischen Umrichterpenetration und
- einer dynamischen Umrichterpenetration
des elektrischen Versorgungsnetzes oder eines Netzabschnitts (302)davon gesteuert wird, wobei
- die statische Umrichterpenetration ein Verhältnis bezeichnet von
- einer Summe der Nennleistungen aller Umrichtereinspeiser, die mit dem elektrischen Versorgungsnetz bzw. dem Netzabschnitt (302) verbunden sind, zu
- einer Summe der Nennleistungen aller Einspeiser, die mit dem elektrischen Versorgungsnetz bzw. dem Netzabschnitt (302) verbunden sind, und
- die dynamische Umrichterpenetration ein Verhältnis bezeichnet von
- einer Leistungsmenge, die durch alle mit dem elektrischen Versorgungsnetz bzw. dem Netzabschnitt (302) verbundenen Umrichtereinspeiser eingespeist wird, zu
- einer Leistungsmenge, die durch alle mit dem elektrischen Versorgungsnetz bzw. dem Netzabschnitt (302) verbundenen Einspeiser eingespeist wird.

2. Verfahren nach Anspruch 1, **dadurch gekennzeichnet, dass**
- das Einspeisen zusätzlich in Abhängigkeit von
- einer Umrichterreserveleistung gesteuert wird, wobei die Umrichterreserveleistung ein Verhältnis bezeichnet von
- einer Leistungsmenge, die durch alle Umrichtereinspeiser in das elektrische Versorgungsnetz bzw. den Netzabschnitt (302) eingespeist wird, zu
- einer Leistungsmenge, auf die die Umrichtereinspeiser ihre eingespeiste Leistungsmenge erhöhen können.

3. Verfahren nach einem der Ansprüche 1 oder 2, **dadurch gekennzeichnet, dass**
- eine statische Umrichterpenetration geschätzt wird in Abhängigkeit von wenigstens einem Schätzkriterium einer ersten Gruppe aus der Liste aufweisend
- eine erfasste Windgeschwindigkeit,
- eine erfasste Sonneneinstrahlung,
- eine erfasste aktuelle Netzlast des elektrischen Versorgungsnetzes oder des Netzabschnitts (302), - eine Aktivierungsvorschrift als eine Vorschrift zum Aktivieren von Umrichtereinspeisern, und
- eine bekannte Anzahl angeschlossener, aber nichteinspeisender Umrichtereinspeiser
und/oder
- eine dynamische Umrichterpenetration geschätzt wird in Abhängigkeit von wenigstens einem Schätzkriterium einer zweiten Gruppe aus der Liste aufweisend
- eine erfasste, in das elektrische Versorgungsnetz eingespeiste Leistung aus regenerativen Energiequellen,
- eine erfasste aktuelle Netzlast des elektrischen Versorgungsnetzes oder des Netzabschnitts (302), und
- eine erfasste Umrichterreserveleistung.

4. Verfahren nach einem der vorstehenden Ansprüche, **dadurch gekennzeichnet, dass**
- aus einer erfassten statischen Umrichterpenetration eine Steuerungseigenschaft einer ersten Gruppe abgeleitet wird, aus der Liste aufweisend:
- ein Blindleistungsstellvermögen mit einem Blindleistungsstellbereich,
- eine dynamische Netzstützungseigenschaft, die durch einen einspeisbaren Kurzschlussstrom gekennzeichnet ist,
- ein Potential zum Bereitstellen einer Momentanreserve, und
- ein Spannungsprägungssgrad, der ein Verhältnis beschreibt von spannungsprägend durch wenigstens einen Umrichtereinspeiser eingespeister Leistung zu stromprägend durch wenigstens einen Umrichtereinspeiser eingespeister Leistung, zu dem oder bis zu dem Umrichtereinspeiser eine spannungsprägende Einspeisung durchführen sollen.

5. Verfahren nach einem der vorstehenden Ansprüche, **dadurch gekennzeichnet, dass** in Abhängigkeit von der statischen Umrichterpenetration wenigstens eine Steuerungsvorschrift einer ersten Gruppe aktiviert, deaktiviert oder eingestellt wird, aus der Liste aufweisend:
- eine Blindleistungsregelung bzw. eine Spannungsregelung,
- ein Bereitstellen einer schnellen Leistungsreduktion, insbesondere zum Aufnehmen elektrischer Leistung,
- ein Bereitstellen einer Momentanreserve durch Windenergieanlagen als Umrichtereinspeiser, insbesondere durch Erhöhen einer Drehzahl der jeweiligen Windenergieanlage, um eine erhöhte Rotationsenergie zu erreichen, insbesondere in einem Leistungsbereich unterhalb von 40% Nennleistung des Umrichtereinspeisers,
- eine ganz oder teilweise Durchführung einer Spannungsprägung durch die Umrichtereinspeiser,
- ein Einrichten eines Phasenschieberbetriebs durch wenigstens einen der Umrichtereinspeiser,
- ein Ansteuern abgeschalteter Umrichtereinspeiser zum Einschalten der Umrichtereinspeiser und Vorhalten oder Erhöhen einer STATCOM-Funktionalität, und
- eine Fehlerdurchfahrsteuerung, insbesondere ein Aktivieren einer Blindleistungsfahrweise, bei der beim Erreichen einer Stromgrenze ein Einspeisen einer Blindleistung gegenüber einem Einspeisen einer Wirkleistung priorisiert wird.

6. Verfahren nach einem der vorstehenden Ansprüche, **dadurch gekennzeichnet, dass**
- aus einer erfassten dynamischen Umrichterpenetration eine Steuerungseigenschaft einer zweiten Gruppe abgeleitet wird, aus der Liste aufweisend:
- ein Bereitstellungsvermögen einer positiven Regelreserve, die bei Bedarf durch die Umrichtereinspeiser eingespeiste Wirkleistung erhöhen kann,
- ein Bereitstellungsvermögen einer negativen Regelreserve, die bei Bedarf durch die Umrichtereinspeiser eingespeiste Wirkleistung reduzieren kann,
- ein Bereitstellungsvermögen einer Momentanreserve, die besonders für Windenergieanlagen aus Rotationsenergie eine kurzfristige Stützleistung bereitstellen kann und insbesondere eine Einstellung der verfügbaren Momentanreserve durch eine Einstellung einer Drehzahl der Windenergieanlage durchführen kann.

7. Verfahren nach einem der vorstehenden Ansprüche, **dadurch gekennzeichnet, dass** in Abhängigkeit von der dynamischen Umrichterpenetration wenigstens eine Steuerungsvorschrift einer zweiten Gruppe aktiviert, deaktiviert oder eingestellt wird, aus der Liste aufweisend:
- eine Frequenzstützungsregelung durch Einstellen einer Wirkleistungseinspeisung in Abhängigkeit von einer Netzfrequenz,
- ein Bereitstellen einer Momentanreserve durch Windenergieanlagen als Umrichtereinspeiser, insbesondere durch Erhöhen einer Drehzahl der jeweiligen Windenergieanlage, um eine erhöhte Rotationsenergie zu erreichen, insbesondere in einem Leistungsbereich unterhalb von 40% Nennleistung des Umrichtereinspeisers
- ein Durchführen einer Leistungserhöhung durch Umrichtereinspeiser beim Auftreten einer Netzfrequenz unterhalb einer Netznennfrequenz, insbesondere beim Auftreten einer Unterfrequenz,
- ein Durchführen einer Leistungsreduzierung durch Umrichtereinspeiser beim Auftreten einer Netzfrequenz oberhalb einer Netznennfrequenz, insbesondere ohne Verwendung eines Chopperbetriebs und/oder beim Auftreten einer Unterfrequenz,
- eine von der Netzfrequenz abhängige Regelung von mit dem elektrischen Versorgungsnetz verbundenen Lasten,
- eine Fehlerdurchfahrsteuerung, insbesondere ein Aktivieren einer Wirkleistungsfahrweise, bei der beim Erreichen einer Stromgrenze ein Einspeisen einer Wirkleistung gegenüber einem Einspeisen einer Blindleistung priorisiert wird.

8. Windenergiesystem mit einer oder mehreren Windenergieanlagen, zum Einspeisen elektrischer Leistung in ein elektrisches Versorgungsnetz, und das elektrische Versorgungsnetz (120, 300, 468) umfasst
- mehrere Verbraucher (306, 312) zum Verbrauchen elektrischer Leistung aus dem elektrischen Versorgungsnetz (120, 300, 468), und
- mehrere Einspeiser (304, 308) zum Einspeisen elektrischer Leistung in das elektrische Versorgungsnetz (120, 300, 468), wobei
wenigstens einer der Einspeiser als Umrichtereinspeiser oder als konventioneller Einspeiser vorgesehen sein kann, und jeweils durch eine Nennleistung gekennzeichnet ist, wobei
- ein Umrichtereinspeiser einen Einspeiser bezeichnet, der mittels wenigstens eines Frequenzumrichters oder Frequenzwechselrichters einspeist, und
- ein konventioneller Einspeiser alle übrigen Einspeiser bezeichnet, und wobei
- das Windenergiesystem als Umrichtereinspeiser ausgebildet ist und
- eine Steuerungseinrichtung vorgesehen ist, durch die
das Einspeisen in Abhängigkeit von
- einer statischen Umrichterpenetration und
- einer dynamischen Umrichterpenetration
des elektrischen Versorgungsnetzes oder eines Netzabschnitts (302) davon gesteuert wird, wobei
- die statische Umrichterpenetration ein Verhältnis bezeichnet von
- einer Summe der Nennleistungen aller Umrichtereinspeiser, die mit dem elektrischen Versorgungsnetz bzw. dem Netzabschnitt (302) verbunden sind, zu
- einer Summe der Nennleistungen aller Einspeiser, die mit dem elektrischen Versorgungsnetz bzw. dem Netzabschnitt (302) verbunden sind, und
- die dynamische Umrichterpenetration ein Verhältnis bezeichnet von
- einer Leistungsmenge, die durch alle mit dem elektrischen Versorgungsnetz bzw. dem Netzabschnitt (302) verbundenen Umrichtereinspeiser eingespeist wird, zu
- einer Leistungsmenge, die durch alle mit dem elektrischen Versorgungsnetz bzw. dem Netzabschnitt (302) verbundenen Einspeiser eingespeist wird.

9. Windenergiesystem nach Anspruch 8, **dadurch gekennzeichnet, dass**
- das Windenergiesystem eine Datenschnittstelle aufweist, die vorbereitet ist zum Austauschen von Steuerinformationen aus der Liste aufweisend
- einer erfassten statischen Umrichterpenetration,
- einer erfassten dynamischen Umrichterpenetration,
- Steuerungseigenschaften und
- Steuerungsvorschriften, und/oder dass
- die Steuerungseinrichtung dazu vorbereitet ist, eine, mehrere oder alle der Steuerinformationen
- zum Übertragen zu erzeugen und/oder
- zum Steuern des Einspeisens auszuwerten.

10. Windenergiesystem nach Anspruch 8 oder 9, **dadurch gekennzeichnet, dass**
das Windenergiesystem, insbesondere die Steuerungseinrichtung dazu vorbereitet ist, wenigstens ein Verfahren nach einem der Ansprüche 1 bis 7 auszuführen.
